(19) Europäisches Patentamt

European Patent Office

Office européen des brevets

(11) **EP 1 145 192 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **00920358.9**

(22) Anmeldetag: **01.03.2000**

(51) Int Cl.⁷: **G06N 3/04**

(86) Internationale Anmeldenummer:
**PCT/DE00/00632**

(87) Internationale Veröffentlichungsnummer:
**WO 00/055809 (21.09.2000 Gazette 2000/38)**

(54) **ANORDNUNG MITEINANDER VERBUNDENER RECHENELEMENTE, VERFAHREN ZUR RECHNERGESTÜTZTEN ERMITTLUNG EINER DYNAMIK, DIE EINEM DYNAMISCHEN PROZESS ZUGRUNDE LIEGT UND VERFAHREN ZUM RECHNERGESTÜTZTEN TRAINIEREN EINER ANORDNUNG MITEINANDER VERBUNDENER RECHENELEMENTE**

ASSEMBLY OF INTERCONNECTED COMPUTING ELEMENTS, METHOD FOR COMPUTER-ASSISTED DETERMINATION OF A DYNAMIC WHICH IS THE BASE OF A DYNAMIC PROCESS, AND METHOD FOR COMPUTER-ASSISTED TRAINING OF AN ASSEMBLY OF INTERCONNECTED ELEMENTS

CONFIGURATION D'ELEMENTS INFORMATIQUES INTERCONNECTES, PROCEDE DE DETERMINATION ASSISTEE PAR ORDINATEUR D'UNE DYNAMIQUE A LA BASE D'UN PROCESSUS DYNAMIQUE ET PROCEDE D'APPRENTISSAGE ASSISTE PAR ORDINATEUR D'UNE CONFIGURATION D'ELEMENTS INFORMATIQUES INTERCONNECTES

(84) Benannte Vertragsstaaten:
**DE FR GB IT NL**

(30) Priorität: **03.03.1999 DE 19909359**

(43) Veröffentlichungstag der Anmeldung:
**17.10.2001 Patentblatt 2001/42**

(73) Patentinhaber: **SIEMENS AKTIENGESELLSCHAFT**
**80333 München (DE)**

(72) Erfinder:
• **NEUNEIER, Ralf**
**D-81667 München (DE)**
• **ZIMMERMANN, Hans-Georg**
**D-82319 Starnberg/Percha (DE)**

(56) Entgegenhaltungen:
**US-A- 5 761 386**

• **MAKOTO HIRAHARA ET AL: "A NEURAL NETWORK MODEL FOR VISUAL MOTION DETECTION THAT CAN EXPLAIN PSYCHOPHYSICAL AND NEUROPHYSIOLOGICAL PHENOMENA" BIOLOGICAL CYBERNETICS,DE,SPRINGER VERLAG, HEIDELBERG, Bd. 68, Nr. 3, 1992, Seiten 247-252, XP000332691 ISSN: 0340-1200**
• **DELIANG WANG ET AL: "ANTICIPATION-BASED TEMPORAL PATTERN GENERATION" IEEE TRANSACTIONS ON SYSTEMS, MAN AND CYBERNETICS,US,IEEE INC. NEW YORK, Bd. 25, Nr. 4, 1. April 1995 (1995-04-01), Seiten 615-628, XP000501275 ISSN: 0018-9472**

Bemerkungen:
Derzeit sind die WIPO-Publikationsdaten A3 nicht verfügbar.

EP 1 145 192 B1

**Beschreibung**

Die Erfindung betrifft eine Anordnung miteinander verbundener Rechenelemente, Verfahren zur rechnergestützten Ermittlung einer Dynamik, die einem dynamischen Prozeß zugrunde liegt sowie ein Verfahren zum rechnergestützten Trainieren einer Anordnung miteinander verbundener Rechenelemente.

Aus [1] ist es bekannt, zur Ermittlung einer Dynamik, die einem dynamischen Prozeß zugrunde liegt, eine Anordnung miteinander verbundener Rechenelemente einzusetzen.

Allgemein wird ein dynamischer Prozeß üblicherweise durch eine Zustandsübergangsbeschreibung, die für einen Beobachter des dynamischen Prozesses nicht sichtbar ist, und eine Ausgangsgleichung, die beobachtbare Größen des technischen dynamischen Prozesses beschreibt, beschrieben.

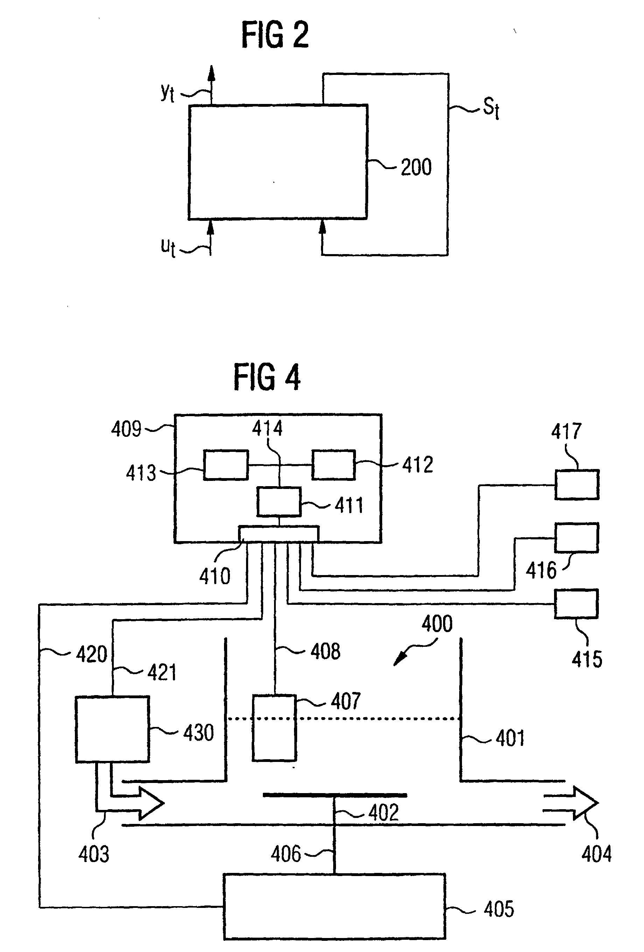

Eine solche Struktur ist in **Fig.2** dargestellt.

Ein dynamisches System 200 unterliegt dem Einfluß einer externen Eingangsgröße u vorgebbarer Dimension, wobei eine Eingangsgröße $u_t$ zu einem Zeitpunkt t mit $u_t$ bezeichnet wird:

$$u_t \in \Re^l,$$

wobei mit l eine natürliche Zahl bezeichnet wird.

Die Eingangsgröße $u_t$ zu einem Zeitpunkt t verursacht eine Veränderung des dynamischen Prozesses, der in dem dynamischen System 200 abläuft.

Ein innerer Zustand $s_t$ ($s_t \in \Re^m$) vorgebbarer Dimension m zu einem Zeitpunkt t ist für einen Beobachter des dynamischen Systems 200 nicht beobachtbar.

In Abhängigkeit vom inneren Zustand $s_t$ und der Eingangsgröße $u_t$ wird ein Zustandsübergang des inneren Zustandes $s_t$ des dynamischen Prozesses verursacht und der Zustand des dynamischen Prozesses geht über in einen Folgezustand $s_{t+1}$ zu einem folgenden Zeitpunkt t+1.

Dabei gilt:

$$s_{t+1} = f(s_t, u_t). \tag{1}$$

wobei mit f(.) eine allgemeine Abbildungsvorschrift bezeichnet wird.

Eine von einem Beobachter des dynamischen Systems 200 beobachtbare Ausgangsgröße $y_t$ zu einem Zeit-punkt t hängt ab von der Eingangsgröße $u_t$ sowie dem inneren Zustand $s_t$.

Die Ausgangsgröße $y_t$ ($y_t \in \Re^n$) ist vorgebbarer Dimension n.

Die Abhängigkeit der Ausgangsgröße $y_t$ von der Eingangsgröße $u_t$ und dem inneren Zustand $s_t$ des dynami-schen Prozesses ist durch folgende allgemeine Vorschrift gegeben:

$$y_t = g(s_t, u_t), \tag{2}$$

wobei mit g(.) eine allgemeine Abbildungsvorschrift bezeichnet wird.

Zur Beschreibung des dynamischen Systems 200 wird in [1] eine Anordnung miteinander verbundener Rechenelemente in Form eines neuronalen Netzes miteinander verbundener Neuronen eingesetzt. Die Verbindungen zwischen den Neuronen des neuronalen Netzes sind gewichtet. Die Gewichte des neuronalen Netzes sind in einem Parametervektor v zusammengefaßt.

Somit hängt ein innerer Zustand eines dynamischen Systems, welches einem dynamischen Prozeß unterliegt, gemäß folgender Vorschrift von der Eingangsgröße $u_t$ und dem inneren Zustand des vorangegangenen Zeitpunktes $s_t$ und dem Parametervektor v ab:

$$s_{t+1} = NN(v, s_t, u_t), \tag{3}$$

wobei mit NN(.) eine durch das neuronale Netz vorgegebene Abbildungsvorschrift bezeichnet wird.

Aus [2] ist eine als Time Delay Recurrent Neural Network (TDRNN) bezeichnete Anordnung bekannt.

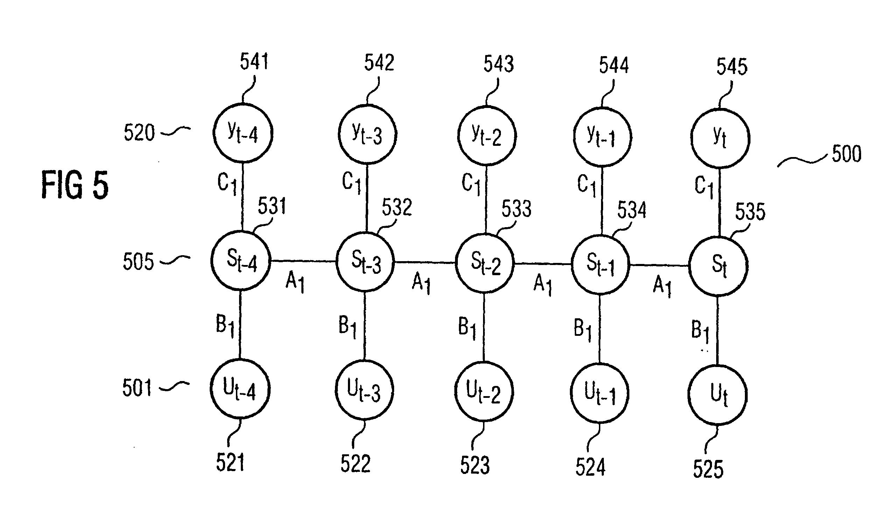

Das bekannte TDRNN ist in **Fig.5** als ein über eine endliche Anzahl von Zeitpunkten (dargestellt 5 Zeitpunkte: t-4, t-3, t-2, t-1, t) entfaltetes neuronales Netz 500 dargestellt.

Das in **Fig.5** dargestellte neuronale Netz 500 weist eine Eingangsschicht 501 mit fünf Teileingangsschichten 521, 522, 523, 524 und 525 auf, die jeweils eine vorgebbare Anzahl Eingangs-Rechenelemente enthalten, denen Eingangsgrößen $u_{t-4}$, $u_{t-3}$, $u_{t-2}$, $u_{t-1}$ und $u_t$ zu vorgebbaren Zeitpunkten t-4, t-3, t-2, t-1 und t, d.h. im weiteren beschriebene Zeitreihenwerte mit vorgegebenen Zeitschritten, anlegbar sind.

Eingangs-Rechenelemente, d.h. Eingangsneuronen, sind über variable Verbindungen mit Neuronen einer vorgebbaren Anzahl versteckter Schichten 505 (dargestellt 5 verdeckte Schichten) verbunden.

Dabei sind Neuronen einer ersten 531, einer zweiten 532, einer dritten 533, einer vierten 534 und einer fünften 535 versteckten Schicht jeweils mit Neuronen der ersten 521, der zweiten 522, der dritten 523, der vierten 524 und der fünften 525 Teileingangsschicht verbunden.

Die Verbindungen zwischen der ersten 531, der zweiten 532, der dritten 533, der vierten 534 und der fünften 535 versteckten Schicht mit jeweils der ersten 521, der zweiten 522, der dritten 523, der vierten 524 und der fünften 525 Teileingangsschicht sind jeweils gleich. Die Gewichte aller Verbindungen sind jeweils in einer ersten Verbindungsmatrix $B_1$ enthalten.

Ferner sind die Neuronen der ersten versteckten Schicht 531 mit ihren Ausgängen mit Eingängen von Neuronen der zweiten versteckten Schicht 532 gemäß einer durch eine zweite Verbindungsmatrix $A_1$ gegebene Struktur verbunden. Die Neuronen der zweiten versteckten Schicht 532 sind mit ihren Ausgängen mit Eingängen von Neuronen der dritten versteckten Schicht 533 gemäß einer durch die zweite Verbindungsmatrix $A_1$ gegebene Struktur verbunden. Die Neuronen der dritten versteckten Schicht 533 sind mit ihren Ausgängen mit Eingängen von Neuronen der vierten versteckten Schicht 534 gemäß einer durch die zweite Verbindungsmatrix $A_1$ gegebene Struktur verbunden. Die Neuronen der vierten versteckten Schicht 534 sind mit ihren Ausgängen mit Eingängen von Neuronen der fünften versteckten Schicht 535 gemäß einer durch die zweite Verbindungsmatrix $A_1$ gegebene Struktur verbunden.

In den versteckten Schichten, der ersten versteckten Schicht 531, der zweiten versteckten Schicht 532, der dritten versteckten Schicht 533, der vierten versteckten Schicht 534 und der fünften versteckten Schicht 535 werden jeweils "innere" Zustände oder "innere" Systemzustände $s_{t-4}$, $s_{t-3}$, $s_{t-2}$, $s_{t-1}$, und $s_t$ eines durch das TDRNN beschriebenen dynamischen Prozesses an fünf aufeinanderfolgenden Zeitpunkten t-4, t-3, t-2, t-1 und t repräsentiert.

Die Angaben in den Indizes in den jeweiligen Schichten geben jeweils den Zeitpunkt t-4, t-3, t-2, t-1 und t an, auf die sich jeweils die an den Ausgängen der jeweiligen Schicht abgreifbaren bzw. zuführbaren Signale beziehen ($u_{t-4}$, $u_{t-3}$, $u_{t-2}$, $u_{t-1}$, $u_t$).

Eine Ausgangsschicht 520 weist fünf Teilausgangsschichten, eine erste Teilausgangsschicht 541, eine zweite Teilausgangsschicht 542, eine dritte Teilausgangsschicht 543, eine vierte Teilausgangsschicht 544 sowie eine fünfte Teilausgangsschicht 545 auf. Neuronen der ersten Teilausgangsschicht 541 sind gemäß einer durch eine Ausgangs-Verbindungsmatrix $C_1$ gegebenen Struktur mit Neuronen der ersten versteckten Schicht 531 verbunden. Neuronen der zweiten Teilausgangsschicht 542 sind ebenfalls gemäß der durch die Ausgangs-Verbindungsmatrix $C_1$ gegebenen Struktur mit Neuronen der zweiten versteckten Schicht 532 verbunden. Neuronen der dritten Teilausgangsschicht 543 sind gemäß der Ausgangs-Verbindungsmatrix $C_1$ mit Neuronen der dritten versteckten Schicht 533 verbunden. Neuronen der vierten Teilausgangsschicht 544 sind gemäß der Ausgangs-Verbindungsmatrix $C_1$ mit Neuronen der vierten versteckten Schicht 534 verbunden. Neuronen der fünften Teilausgangsschicht 545 sind gemäß der Ausgangs-Verbindungsmatrix $C_1$ mit Neuronen der fünften versteckten Schicht 535 verbunden. An den Neuronen der Teilausgangsschichten 541, 542, 543, 544 und 545 sind die Ausgangsgrößen für jeweils einen Zeitpunkt t-4, t-3, t-2, t-1, t abgreifbar ($y_{t-4}$, $y_{t-3}$, $y_{t-2}$, $y_{t-1}$, $y_t$).

Der Grundsatz, daß äquivalente Verbindungsmatrizen in einem neuronalen Netz zu einem jeweiligen Zeitpunkt die gleichen Werte aufweisen, wird als Prinzip der sogenannten geteilten Gewichtswerte (Shared Weights) bezeichnet.

Die aus [2] bekannte und als Time Delay Recurrent Neural Network (TDRNN) bezeichnete Anordnung wird in einer Trainingsphase derart trainiert, daß zu einer Eingangsgröße $u_t$ jeweils eine Zielgröße $y_t^d$ an einem realen dynamischen System ermittelt wird. Das Tupel (Eingangsgröße, ermittelte Zielgröße) wird als Trainingsdatum bezeichnet. Eine Vielzahl solcher Trainingsdaten bilden einen Trainingsdatensatz.

Dabei weisen zeitlich aufeinanderfolgende Tupel ($u_{t-4}$, $y_{t-4}^d$) ($u_{t-3}$, $y_{t-3}^d$), ($u_{t-2}$, $y_{t-2}^d$) der Zeitpunkte (t-4, t-3, t-3, ...) des Trainingsdatensatzes jeweils einen vorgegeben Zeitschritt auf.

Mit dem Trainingsdatensatz wird das TDRNN trainiert. Eine Übersicht über verschiedene Trainingsverfahren ist ebenfalls in [1] zu finden.

Es ist an dieser Stelle zu betonen, daß lediglich die Ausgangsgrößen $y_{t-4}$, $y_{t-3}$, ..., $Y_t$ zu Zeitpunkten t-4, t-3, ..., t des dynamischen Systems 200 erkennbar sind. Die "inneren" Systemzustände $s_{t-4}$, $s_{t-3}$ ..., $s_t$ sind nicht beobachtbar.

In der Trainingsphase wird üblicherweise folgende Kostenfunktion E minimiert:

$$E = \frac{1}{T} \sum_{t=1}^{T} \left( y_t - y_t^d \right)^2 \rightarrow \min_{f,g}, \qquad (4)$$

wobei mit T eine Anzahl berücksichtigter Zeitpunkte bezeichnet wird.

In [3] ist ferner ein Überblick über Grundlagen neuronaler Netze und die Anwendungsmöglichkeiten neuronaler Netze im Bereich der Ökonomie zu finden.

Die bekannten Anordnungen und Verfahren weisen insbesondere den Nachteil auf, daß mit ihnen für eine Eingangsgröße $u_t$ zu einem aktuellen Zeitpunkt t oder für eine Eingangsgröße $u_{t-1}$ zu einem zeitlich um einen vorgegeben Zeitschritt vorangegangenen Zeitpunkt t-1 nur der aktuelle Zustand eines Prozesses beschreibbar ist. Ein um einen vorgebbaren Zeitschritt zeitlich folgender zukünftiger Folgezustand des Prozesses oder um jeweils einen vorgebbaren Zeitschritt zeitlich aufeinanderfolgende zukünftige Folgezustände des Prozesses können in den meisten Fällen nicht beschrieben bzw. vorhergesagt werden.

Aus [5] und [6] sind weitere Anordnung, neuronale Netze, zur Zeitreihenvorhersage bekannt.

Bei dem aus [6] bekannten neuronalen Netz werden mittels einer "multi-step ahead prediction" mehrere zukünftige Ereignisse vorhergesagt.

Somit liegt der Erfindung das Problem zugrunde, eine Anordnung miteinander verbundener Rechenelemente anzugeben, mit der zeitlich aufeinanderfolgende zukünftige Folgezustände eines dynamischen Prozesses beschrieben werden können und welche Anordnung nicht den Nachteilen der bekannten Anordnungen unterliegt.

Ferner liegt der Erfindung das Problem zugrunde, ein Verfahren zur rechnergestützten Ermittlung einer Dynamik, die einem dynamischen Prozeß zugrunde liegt, anzugeben, mit dem zeitlich aufeinanderfolgende zukünftige Folgezustände des dynamischen Prozesses beschrieben werden können.

Die Probleme werden durch eine Anordnung sowie Verfahren mit den Merkmalen gemäß den unabhängigen Ansprüchen gelöst.

Eine Anordnung miteinander verbundener Rechenelemente weist folgende Merkmale auf:

- die Anordnung umfaßt mindestens eine erste Unteranordnung mit einem zugehörigen ersten Eingangsrechenelement, dem Zeitreihenwerte, welche jeweils einen Zustand eines Systems in einem ersten Zustandsraum beschreiben, zuführbar sind, und einem zugehörigen ersten Zwischenrechenelement, mit welchem ein Zustand des Systems in einem zweiten Zustandsraum beschreibbar ist, wobei das erste Eingangsrechenelement und das erste Zwischenrechenelement miteinander verbunden sind,
- die Anordnung umfaßt mindestens eine zweite Unteranordnung mit einem zugehörigen zweiten Zwischenrechenelement, mit welchem ein Zustand des Systems in dem zweiten Zustandsraum beschreibbar ist, und einem zugehörigen ersten Ausgangsrechenelement, an dem ein erstes Ausgangssignal abgreifbar, welches einen Zustand des dynamischen Systems in dem ersten Zustandsraum beschreibt, ist, wobei das zweite Zwischenrechenelement und das erste Ausgangsrechenelement miteinander verbunden sind,
- die Anordnung umfaßt mindestens eine dritte Unteranordnung mit einem zugehörigen dritten Zwischenrechenelement, mit welchem ein Zustand des Systems in dem zweiten Zustandsraum beschreibbar ist, und einem zugehörigen zweiten Ausgangsrechenelement, an dem ein zweites Ausgangssignal, welches einen Zustand des dynamischen Systems in dem ersten Zustandsraum beschreibt, abgreifbar ist, wobei das dritte Zwischenrechenelement und das zweite Ausgangsrechenelement miteinander verbunden sind,
- die erste Unteranordnung, die zweite Unteranordnung und die dritte Unteranordnung sind jeweils durch eine Kopplung der zugehörigen Zwischenrechenelemente miteinander verbunden,
- Gewichte, welche jeweils einer Verbindung zwischen zwei Zwischenrechenelementen zugeordnet sind, sind untereinander gleich und
- Gewichte, welche jeweils einer Verbindung zwischen einem Zwischenrechenelement und einem Ausgangsrechenelement zugeordnet sind, sind untereinander gleich.

Bei einem Verfahren zur rechnergestützten Ermittlung einer Dynamik, die einem dynamischen Prozeß zugrunde liegt, werden folgende Schritte durchgeführt:

a) der dynamische Prozeß wird durch eine Zeitreihe mit Zeitreihenwerten in einem ersten Zustandsraum beschrieben, wobei mindestens ein erster Zeitreihenwert einen Zustand des dynamischen Prozesses zu einem ersten Zeitpunkt und ein zweiter Zeitreihenwert einen Zustand des dynamischen Prozesses zu einem zweiten Zeitpunkt beschreibt,

b) der erster Zeitreihenwert wird in einen zweiten Zustandsraum transformiert,

c) der erste Zeitreihenwert in dem zweiten Zustandsraum wird einer Abbildung auf einen zweiten Zeitreihenwert in dem zweiten Zustandsraum unterzogen,

d) der zweite Zeitreihenwert in dem zweiten Zustandsraum wird einer Abbildung auf einen dritten Zeitreihenwert in dem zweiten Zustandsraum unterzogen,

e) der zweite Zeitreihenwert in dem zweiten Zustandsraum und der dritte Zeitreihenwert in dem zweiten Zustandsraum werden jeweils in den ersten Zustandsraum rücktransformiert,

f) unter Verwendung der Zeitreihenwerten in dem zweiten Zustandsraum wird die Dynamik des dynamischen Prozesses ermittelt.

Bei einem Verfahren zur rechnergestützten Ermittlung einer Dynamik, die einem dynamischen Prozeß zugrunde liegt, welches Verfahren unter Verwendung einer Anordnung miteinander verbundener Rechenelemente durchgeführt wird, wobei die Anordnung folgenden Aufbau aufweist:

- bei mindestens einer ersten Unteranordnung werden ein zugehöriges erstes Eingangsrechenelement, dem ein Eingangssignal, welches einen Zustand des dynamischen Prozesses in einem ersten Zustandsraum beschreibt, zuführbar ist, und ein zugehöriges erstes Zwischenrechenelement, mit welchem ein Zustand des dynamischen Prozesses in einem zweiten Zustandsraum beschreibbar ist, miteinander verbunden,
- bei mindestens einer zweiten Unteranordnung werden ein zugehöriges zweites Zwischenrechenelement, mit welchem ein Zustand des dynamischen Prozesses in dem zweiten Zustandsraum beschreibbar ist, und ein zugehöriges erstes Ausgangsrechenelement, an dem ein erstes Ausgangssignal, welches einen Zustand des dynamischen Prozesses in dem ersten Zustandsraum beschreibt, abgreifbar ist, miteinander verbunden,
- bei mindestens einer dritten Unteranordnung werden ein zugehöriges drittes Zwischenrechenelement, mit welchem ein Zustand des dynamischen Prozesses in dem zweiten Zustandsraum beschreibbar ist, und ein zugehöriges zweites Ausgangsrechenelement, an dem ein zweites Ausgangssignal, welches einen Zustand des dynamischen Prozesses in dem ersten Zustandsraum beschreibt, abgreifbar ist, miteinander verbunden,
- die erste Unteranordnung, die zweite Unteranordnung und die dritte Unteranordnung werden jeweils durch eine Kopplung der zugehörigen Zwischenrechenelemente miteinander verbunden,
- Gewichte, welche jeweils einer Verbindung zwischen zwei Zwischenrechenelementen zugeordnet sind, werden derart bestimmt, daß die Gewichte untereinander gleich sind,
- Gewichte, welche jeweils einer Verbindung zwischen einem Zwischenrechenelement und einem Ausgangsrechenelement zugeordnet sind, werden derart bestimmt, daß die Gewichte untereinander gleich,

wird der Anordnung das Eingangssignal zugeführt. Die Anordnung ermittelt das erste Ausgangssignal und das zweite Ausgangssignal. Unter Verwendung des ersten Ausgangssignals und des zweite Ausgangssignals wird die Dynamik ermittelt.

Bei einem Verfahren zum rechnergestützten Trainieren einer Anordnung miteinander verbundener Rechenelemente mit folgenden Komponenten:

- bei mindestens einer ersten Unteranordnung werden ein zugehöriges erstes Eingangsrechenelement, dem ein Eingangssignal, welches einen Zustand eines Systems in einem ersten Zustandsraum beschreibt, zuführbar ist, und ein zugehöriges erstes Zwischenrechenelement, mit welchem ein Zustand des Systems in einem zweiten Zustandsraum beschreibbar ist, miteinander verbunden,
- bei mindestens einer zweiten Unteranordnung werden ein zugehöriges zweites Zwischenrechenelement, mit welchem ein Zustand des Systems in dem zweiten Zustandsraum beschreibbar ist, und ein zugehöriges erstes Ausgangsrechenelement, an dem ein erstes Ausgangssignal, welches einen Zustand des Systems in dem ersten Zustandsraum beschreibt, abgreifbar ist, miteinander verbunden,
- bei mindestens einer dritten Unteranordnung werden ein zugehöriges drittes Zwischenrechenelement, mit welchem ein Zustand des Systems in dem zweiten Zustandsraum beschreibbar ist, und ein zugehöriges zweites Ausgangsrechenelement, an dem ein zweites Ausgangssignal, welches einen Zustand des Systems in dem ersten Zustandsraum beschreibt, abgreifbar ist, miteinander verbunden,
- die erste Unteranordnung, die zweite Unteranordnung und die dritte Unteranordnung werden jeweils durch eine Kopplung der zugehörigen Zwischenrechenelemente miteinander verbunden,
- Gewichte, welche jeweils einer Verbindung zwischen zwei Zwischenrechenelementen zugeordnet sind, werden derart bestimmt, daß die Gewichte untereinander gleich sind,
- Gewichte, welche jeweils einer Verbindung zwischen einem Zwischenrechenelement und einem Ausgangsrechenelement zugeordnet sind, werden derart bestimmt, daß die Gewichte untereinander gleich,

wird die Anordnung unter Verwendung vorgegebener Trainingsdaten, welche als das Eingangssignal an das erste Eingangsrechenelement angelegt werden, derart trainiert, daß nur in solchen Unteranordnungen "error"-Werte gebildet werden, welche Unteranordnungen Zustände des dynamischen Systems repräsentieren, deren Zeitpunkte jeweils einem Zeitpunkt eines Trainingdatums entsprechen.

Die Anordnung ist insbesondere geeignet zur Durchführung der erfindungsgemäßen Verfahren oder einer deren nachfolgend erläuterten Weiterbildungen.

Unter Verwendung der Erfindung können mehrerer jeweils um einen vorgebbaren Zeitschritt aufeinanderfolgende Folgezustände eines dynamischen Prozesses prognostiziert werden. Damit sind Zustände des dynamischen Prozesses über einen großen Zeitraum prognostizierbar.

Eine derartige Ermittlung von zukünftigen Zuständen des dynamischen Prozesses wird als ein sogenanntes "overshooting" bezeichnet.

Dadurch kann die Erfindung für die Durchführung von einer sogenannten "first cause"-Analyse, für eine Ermittlung sogenannter "early warning"-Indikatoren und im Rahmen eines Frühwarnsystems eingesetzt werden. Das heißt, daß mit der Erfindung für einen dynamischer Prozeß solche Indikatoren oder Prozeßzustände ermittelt werden können, die unerwünschte Prozeßzustände, die in einem großen zeitlichen Abstand bezüglich eines aktuellen Zeitpunkt folgen, schon an dem aktuellen Zeitpunkt anzeigen. Somit kann frühzeitig eine erste Ursache von einer unerwünschte Entwicklung des dynamischen Prozesses erkannt und damit eine Gegenmaßnahme eingeleitet werden.

Insbesondere wird durch die Erfindung erreicht, daß zeitlich ältere Zustände bei der Ermittlung der Dynamik, die einem dynamischen Prozeß zugrunde liegt, weniger stark berücksichtigt werden als zeitlich jüngere Zustände.

Darüber hinaus weist die Erfindung den Vorteil auf, daß für ein Trainieren der erfindungsgemäßen Anordnung und bei dem erfindungsgemäßen Trainingsverfahren weniger Trainingsdaten im Vergleich zu bekannten Anordnungen und Verfahren notwendig sind, und damit ein effizienteres Lernen möglich ist. Dies ist insbesondere aufgrund einer besonderen Auswahl und Anordnung bzw. Struktur von den verwendeten Rechenelementen bei der erfindungsgemäßen Anordnung möglich.

Bevorzugte Weiterbildungen der Erfindung ergeben sich aus den abhängigen Ansprüchen.

Bevorzugt werden jeweils mehrere erste, zweite und/oder dritte Unteranordnungen verwendet.

Eine Weiterbildung umfaßt mindestens eine vierte Unteranordnung mit einem zugehörigen vierten Zwischenrechenelement, mit welchem ein Zustand des Systems in dem zweiten Zustandsraum beschreibbar ist, und mit einem zugehörigen zweiten Eingangsrechenelement. Das zugehörige vierte Zwischenrechenelement und das zugehörige zweite Eingangsrechenelement, welchem weitere Zeitreihenwerte, welche jeweils einen weiteren Zustand des Systems in dem ersten Zustandsraum beschreiben, zuführbar sind, sind miteinander verknüpft. Die vierte Unteranordnung ist durch eine Kopplung des zugehörigen vierten Zwischenrechenelements mit dem ersten Zwischenrechenelement mit der ersten Unteranordnung gekoppelt. Bei der Weiterbildung sind Gewichte, welche jeweils einer Verbindung zwischen einem Eingangsrechenelement und einem Zwischenrechenelement zugeordnet sind, untereinander gleich.

Bevorzugt werden mehrere vierte Unteranordnungen verwendet.

Einfache Ausgangssignale lassen sich dann an einem Ausgangsrechenelement abgreifen, wenn ein Ausgangsrechenelement mit mehreren Zwischenrechenelementen verbunden ist.

In einer bevorzugten Ausgestaltung repräsentieren die erste, die zweite und die dritte Unteranordnung das System jeweils zu einem ersten, zweiten und dritten Zeitpunkt, wobei der erste und der zweite und der dritte Zeitpunkt jeweils aufeinanderfolgende Zeitpunkte sind und zwischen dem ersten Zeitpunkt und dem zweiten Zeitpunkt ein erstes Zeitintervall liegt, welches einen ersten vorgebbaren Zeitschritt aufweist, und zwischen dem zweiten und dem dritten Zeitpunkt ein zweites Zeitintervall liegt, welches einen vorgebbaren zweiten Zeitschritt aufweist.

Für eine sogenannte Langzeitprognose ist es vorteilhaft, wenn die erste Unteranordnung einen aktuellen Zustand des System repräsentiert, die zweite Unteranordnung einen um den ersten vorgebbaren Zeitschritt verschobenen zukünftigen ersten Zustand des System repräsentiert und die dritte Unteranordnung einen um den zweiten vorgebbaren Zeitschritt verschobenen zukünftigen zweiten Zustand des System repräsentiert.

Bevorzugt sind der erste vorgebbare Zeitschritt und der zweite vorgebbare Zeitschritt untereinander gleich.

In einer Weiterbildung ist der zweite vorgebbare Zeitschritt ein Vielfaches des ersten vorgebbaren Zeitschritts.

Für eine Ermittlung von sogenannten Zwischenzuständen des Systems ist es vorteilhaft, wenn der erste und/oder der zweite Zeitschritte derart bestimmt werden/wird, daß der erste und/oder der zweite vorgebbare Zeitschritt ein Teiler eines weiteren vorgegebenen Zeitschritts sind, welcher durch eine Zeitreihe, welche durch die Zeitreihenwerte gebildet wird, bestimmt wird.

In einer Ausgestaltung repräsentiert die vierte Unteranordnung das System zu einem vierten Zeitpunkt, wobei zwischen dem vierten Zeitpunkt und dem ersten Zeitpunkt ein drittes Zeitintervall liegt, welches einen dritten vorgebbaren Zeitschritt aufweist.

Bevorzugt repräsentiert die vierte Unteranordnung einen zeitlich älteren Zustand des Systems.

Eine Dynamik läßt sich insbesondere dann einfach ermitteln, wenn zumindest ein Teil der Rechenelemente künstliche Neuronen sind.

Ferner ist es rechentechnisch von besonderem Vorteil, wenn bei einer Ausgestaltung nur ein Gewicht von Gewichten, welche jeweils einer Verbindung zwischen einem Zwischenrechenelement und einem Ausgangsrechenelement zugeordnet sind, einen Wert eins aufweist und die anderen Gewichte von den Gewichten jeweils einen Wert null aufweisen.

Bevorzugt wird eine Weiterbildung zur Ermittlung einer Dynamik eines dynamischen Prozesses eingesetzt.

Eine Ausgestaltung weist eine Meßanordnung zur Erfassung physikalischer Signale auf, mit denen der dynamische Prozeß beschrieben wird.

Bevorzugt wird eine Weiterbildung zur Ermittlung der Dynamik eines dynamischen Prozesses, der in einem technischen System abläuft, insbesondere in einem chemischen Reaktor, oder zur Ermittlung der Dynamik eines Elekro-Kardio-Gramms, oder zur Ermittlung einer ökonomischen oder makroökonomischen Dynamik eingesetzt.

Eine Weiterbildung kann auch zu einer Überwachung oder Steuerung eines dynamischen Prozesses, insbesondere eines chemischen Prozesses, eingesetzt werden.

Die Zeitreihenwerte können aus physikalischen Signalen ermittelt werden.

Ausführungsbeispiele der Erfindung sind in Figuren dargestellt und werden im weiteren näher erläutert.

Es zeigen

Figuren 1a und 1b  Skizzen einer Grundstruktur der Anordnung und einer Anordnung gemäß einem ersten Ausführungsbeispiel;

Figur 2  eine Skizze einer allgemeinen Beschreibung eines dynamischen Systems;

Figur 3  eine Anordnung gemäß einem zweiten Ausführungsbeispiel, bei dem Zwischenzustände eines dynamischen Prozesses ermittelt werden;

Figur 4  eine Skizze eines chemischen Reaktors, von dem Größen gemessen werden, welche mit der Anordnung gemäß dem ersten Ausführungsbeispiel weiterverarbeitet werden;

Figur 5  eine Skizze einer Anordnung eines TDRNN, welche mit endlich vielen Zuständen über die Zeit entfaltet ist;

**Erstes Ausführungsbeispiel: Chemischer Reaktor**

**Fig.4** zeigt einen chemischen Reaktor 400, der mit einer chemischen Substanz 401 gefüllt ist. Der chemische Reaktor 400 umfaßt einen Rührer 402, mit dem die chemische Substanz 401 gerührt wird. In den chemischen Reaktor 400 einfließende weitere chemische Substanzen 403 reagieren während eines vorgebbaren Zeitraums in dem chemischen Reaktor 400 mit der in dem chemischen Reaktor 400 bereits enthaltenen chemischen Substanz 401. Eine aus dem Reaktor 400 ausfließende Substanz 404 wird aus dem chemischen Reaktor 400 über einen Ausgang abgeleitet.

Der Rührer 402 ist über eine Leitung mit einer Steuereinheit 405 verbunden, mit der über ein Steuersignal 406 eine Rührfrequenz des Rührers 402 einstellbar ist.

Ferner ist ein Meßgerät 407 vorgesehen, mit dem Konzentrationen von in der chemischen Substanz 401 enthaltenen chemischen Stoffe gemessen werden.

Meßsignale 408 werden einem Rechner 409 zugeführt, in dem Rechner 409 über eine Eingangs-/Ausgangsschnittstelle 410 und einem Analog/Digital-Wandler 411 digitalisiert und in einem Speicher 412 gespeichert. Ein Prozessor 413 ist ebenso wie der Speicher 412 über einen Bus 414 mit dem Analog/Digital-Wandler 411 verbunden. Der Rechner 409 ist ferner über die Eingangs-/Ausgangsschnittstelle 410 mit der Steuerung 405 des Rührers 402 verbunden und somit steuert der Rechner 409 die Rührfrequenz des Rührers 402.

Der Rechner 409 ist ferner über die Eingangs-/Ausgangsschnittstelle 410 mit einer Tastatur 415, einer Computermaus 416 sowie einem Bildschirm 417 verbunden.

5 Der chemische Reaktor 400 als dynamisches technisches System 200 unterliegt somit einem dynamischen Prozeß.

Der chemische Reaktor 400 wird mittels einer Zustandsbeschreibung beschrieben. Die Eingangsgröße $u_t$ setzt sich in diesem Fall zusammen aus einer Angabe über die Temperatur, die in dem chemischen Reaktor 400 herrscht sowie dem in dem chemischen Reaktor 400 herrschenden Druck und der zu dem Zeitpunkt t eingestellten Rührfrequenz. Somit ist die Eingangsgröße ein dreidimensionaler Vektor.

Ziel der im weiteren beschriebenen Modellierung des chemischen Reaktors 400 ist die Bestimmung der dynamischen Entwicklung der Stoffkonzentrationen, um somit eine effiziente Erzeugung eines zu produzierenden vorgebbaren Zielstoffes als ausfließende Substanz 404 zu ermöglichen.

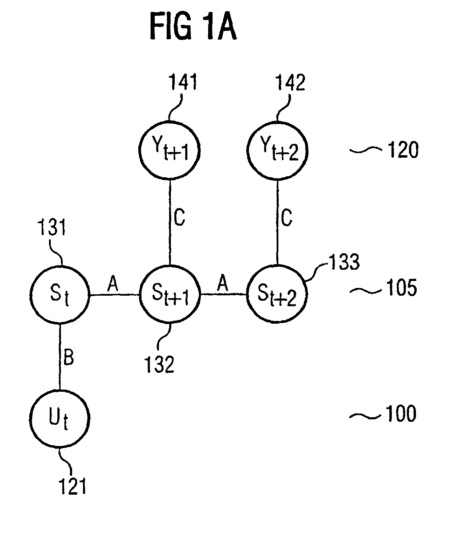

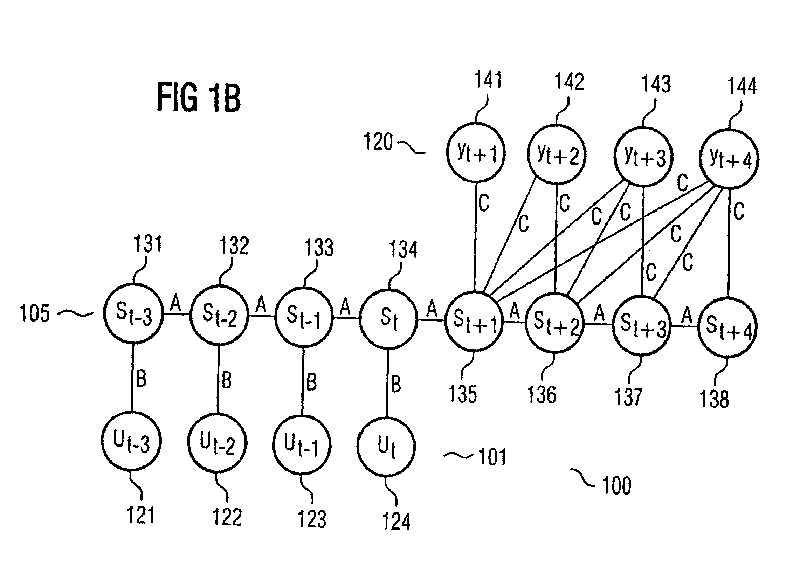

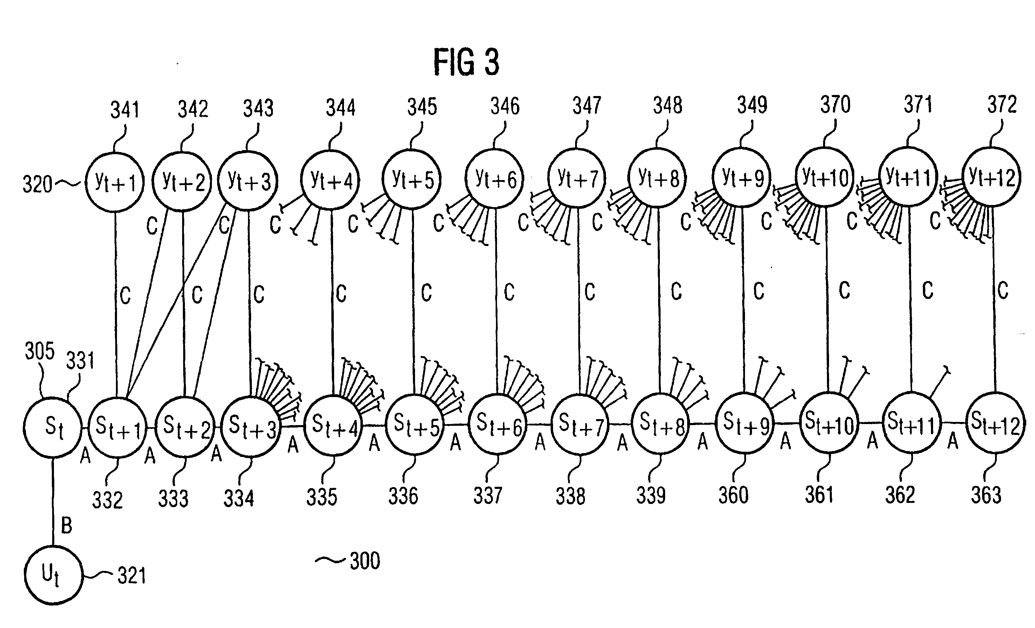

Dies erfolgt unter Verwendung der im weiteren beschriebenen und in den **Fig.1a** und **Fig.1b** dargestellten Anordnung.

Zum einfacheren Verständnis der der Anordnung zugrunde liegenden Prinzipien ist in **Fig.1a** eine Grundstruktur der Anordnung dargestellt. Ausgehend von der Grundstruktur wird die in **Fig.1b** dargestellte Anordnung gebildet

**Fig.1a** zeigt die Grundstruktur der Anordnung, welche ein über drei Zeitpunkte t, t+1, t+2 entfaltetes neuronales Netz 100 ist.

Das in **Fig.1a** dargestellte neuronale Netz 100 weist eine Eingangsschicht 121 auf, die eine vorgebbare Anzahl von Eingangsneuronen enthält, denen Eingangsgrößen $u_t$ zu vorgebbaren Zeitpunkten t, d.h. im weiteren beschriebene Zeitreihenwerte mit vorgegebenen Zeitschritten, anlegbar sind.

Die Eingangsneuronen, sind über variable Verbindungen mit Neuronen einer vorgebbaren Anzahl versteckter Schichten 105 (dargestellt 3 verdeckte Schichten) verbunden.

Dabei sind Neuronen einer ersten versteckten Schicht 131 mit Neuronen der ersten Eingangsschicht 121 verbunden.

Die Verbindung zwischen der ersten versteckten Schicht 131 mit der ersten Eingangsschicht 121 weist Gewichte auf, die in einer ersten Verbindungsmatrix B enthalten sind.

Ferner sind die Neuronen der ersten versteckten Schicht 131 mit ihren Ausgängen mit Eingängen von Neuronen einer zweiten versteckten Schicht 132 gemäß einer durch eine zweite Verbindungsmatrix A gegebene Struktur verbunden. Die Neuronen der zweiten versteckten Schicht 132 sind mit ihren Ausgängen mit Eingängen von Neuronen einer dritten versteckten Schicht 133 gemäß einer durch die zweite Verbindungsmatrix A gegebene Struktur verbunden.

In den versteckten Schichten, der ersten versteckten Schicht 131, der zweiten versteckten Schicht 132 und der dritten versteckten Schicht 133 werden jeweils "innere" Zustände oder "innere" Systemzustände $s_t$, $s_{t+1}$ und $s_{t+2}$ des beschriebenen dynamischen Prozesses an drei aufeinanderfolgenden Zeitpunkten t, t+1 und t+2 repräsentiert.

Die Angaben in den Indizes in den jeweiligen Schichten geben jeweils den Zeitpunkt t, t+1, t+2 an, auf die sich jeweils die an den Ausgängen der jeweiligen Schicht abgreifbaren bzw. zuführbaren Signale ($u_t$) beziehen.

Eine Ausgangsschicht 120 weist zwei Teilausgangsschichten, eine erste Teilausgangsschicht 141 und eine zweite Teilausgangsschicht 142, auf. Neuronen der ersten Teilausgangsschicht 141 sind gemäß einer durch eine Ausgangs-Verbindungsmatrix C gegebenen Struktur mit Neuronen der ersten versteckten Schicht 131 verbunden. Neuronen der zweiten Teilausgangsschicht 142 sind ebenfalls gemäß der durch die Ausgangs-Verbindungsmatrix C gegebenen Struktur mit Neuronen der zweiten versteckten Schicht 132 verbunden.

An den Neuronen der Teilausgangsschichten 141 und 142 sind die Ausgangsgrößen für jeweils einen Zeitpunkt t+1, t+2 abgreifbar ($y_{t+1}$, $y_{t+2}$).

Der Grundsatz, daß äquivalente Verbindungsmatrizen in einem neuronalen Netz zu einem jeweiligen Zeitpunkt die gleichen Werte aufweisen, wird als Prinzip der sogenannten geteilten Gewichtswerte (Shared Weights) bezeichnet.

Ausgehend von dem Prinzip der Shared Weights und ausgehend von der Grundstruktur wird im weiteren die in **Fig.1b** dargestellte Anordnung gebildet erläutert.

Die im weiteren beschriebenen Skizzen sind jeweils so zu verstehen, daß jede Schicht bzw. jede Teilschicht eine vorgebbare Anzahl von Neuronen, d.h. Rechenelementen, aufweist.

Die jeweiligen Verbindungsmatrizen sind beliebiger Dimension und enthalten jeweils zu den entsprechenden Verbindungen zwischen den Neuronen der jeweiligen Schichten die Gewichtswerte.

Von besonderer Bedeutung ist aber, daß die Ausgangs-Verbindungsmatrix C derart bestimmt wird, daß ein Gewicht der Ausgangs-Verbindungsmatrix C den Wert eins aufweist, die anderen Gewichte der Ausgangs-Verbindungsmatrix C aber den Wert null aufweisen.

Die in **Fig.1b** dargestellte Anordnung 100 weist eine Eingangsschicht 101 mit vier Teileingangsschichten 121, 122, 123 und 124 auf, die jeweils eine vorgebbare Anzahl Eingangs-Rechenelemente enthalten, denen Eingangsgrößen $u_{t-3}$, $u_{t-2}$, $u_{t-1}$ und $u_t$ zu vorgebbaren Zeitpunkten t-3, t-2, t-1 und t, d.h. im weiteren beschriebene Zeitreihenwerte mit vorgegebenen Zeitschritten, anlegbar sind.

Dadurch daß derart viele zeitlich vorangegangene Zustände des dynamischen Prozesses durch die jeweiligen Eingangsgrößen berücksichtigbar sind, erhält die Anordnung ein sogenanntes "Langzeitgedächtnis".

Eingangs-Rechenelemente, d.h. Eingangsneuronen, sind über variable Verbindungen mit Neuronen einer vorgebbaren Anzahl versteckter Schichten 105 (dargestellt 8 verdeckte Schichten) verbunden.

Dabei sind Neuronen einer ersten 131, einer zweiten 132, einer dritten 133 und einer vierten 134 versteckten Schicht jeweils mit Neuronen der ersten 121, der zweiten 122, der dritten 123 und der vierten 124 Teileingangsschicht verbunden.

Die Verbindungen zwischen der ersten 131, der zweiten 132, der dritten 133 und der vierten 134 versteckten Schicht mit jeweils der ersten 121, der zweiten 122, der dritten 123 und der vierten 124 Teileingangsschicht sind jeweils gleich. Die Gewichte aller Verbindungen sind jeweils in einer ersten Verbindungsmatrix B enthalten.

Ferner sind die Neuronen der ersten versteckten Schicht 131 mit ihren Ausgängen mit Eingängen von Neuronen der zweiten versteckten Schicht 132 gemäß einer durch eine zweite Verbindungsmatrix A gegebene Struktur verbunden. Die Neuronen der zweiten versteckten Schicht 132 sind mit ihren Ausgängen mit Eingängen von Neuronen der dritten versteckten Schicht 133 gemäß einer durch die zweite Verbindungsmatrix A gegebene Struktur verbunden. Die Neuronen der dritten versteckten Schicht 133 sind mit ihren Ausgängen mit Eingängen von Neuronen der vierten versteckten Schicht 134 gemäß einer durch die zweite Verbindungsmatrix A gegebene Struktur verbunden. Die Neuronen der vierten versteckten Schicht 134 sind mit ihren Ausgängen mit Eingängen von Neuronen einer fünften versteckten Schicht 135 gemäß einer durch die zweite Verbindungsmatrix A gegebene Struktur verbunden. Die Neuronen der fünften versteckten Schicht 135 sind mit ihren Ausgängen mit Eingängen von Neuronen einer sechsten versteckten Schicht 136 gemäß einer durch die zweite Verbindungsmatrix A gegebene Struktur verbunden. Die Neuronen der sechsten versteckten Schicht 136 sind mit ihren Ausgängen mit Eingängen von Neuronen einer siebten versteckten Schicht 137 gemäß einer durch die zweite Verbindungsmatrix A gegebene Struktur verbunden. Die Neuronen der siebten versteckten Schicht 137 sind mit ihren Ausgängen mit Eingängen von Neuronen einer achten versteckten Schicht 138 gemäß einer durch die zweite Verbindungsmatrix A gegebene Struktur verbunden.

In den versteckten Schichten, der ersten versteckten Schicht 131, der zweiten versteckten Schicht 132, der dritten versteckten Schicht 133, der vierten versteckten Schicht 134, der fünften versteckten Schicht 135, der sechsten versteckten Schicht 136, der siebten versteckten Schicht 137 und der achten versteckten Schicht 538 werden jeweils "innere" Zustände oder "innere" Systemzustände $s_{t-3}$, $s_{t-2}$, $s_{t-1}$, $s_t$, $s_{t+1}$, $s_{t+2}$, $s_{t+3}$ und $s_{t+4}$ eines durch die Anordnung beschriebenen dynamischen Prozesses an acht aufeinanderfolgenden Zeitpunkten t-3, t-2, t-1, t, t+1, t+2, t+3 und t+4 repräsentiert.

Die Angaben in den Indizes in den jeweiligen Schichten geben jeweils den Zeitpunkt t-3, t-2, t-1, t, t+1, t+3 und t+4 an, auf die sich jeweils die an den Ausgängen der jeweiligen Schicht abgreifbaren bzw. zuführbaren Signale ($u_{t-3}$, $u_{t-2}$, $u_{t-1}$, $u_t$, $u_{t+1}$, $u_{t+2}$, $u_{t+3}$, $u_{t+4}$) beziehen.

Eine Ausgangsschicht 120 weist vier Teilausgangsschichten, eine erste Teilausgangsschicht 141, eine zweite Teilausgangsschicht 142, eine dritte Teilausgangsschicht 143 und eine vierte Teilausgangsschicht 144 auf.

Neuronen der ersten Teilausgangsschicht 141 sind gemäß einer durch eine Ausgangs-Verbindungsmatrix C gegebenen Struktur mit Neuronen der fünften versteckten Schicht 135 verbunden. Neuronen der zweiten Teilausgangsschicht 142 sind ebenfalls gemäß der durch die Ausgangs-Verbindungsmatrix C gegebenen Struktur jeweils mit Neuronen der fünften versteckten Schicht 135 und mit Neuronen der sechsten versteckten Schicht 136 verbunden.

Neuronen der dritten Teilausgangsschicht 143 sind gemäß der Ausgangs-Verbindungsmatrix C jeweils mit Neuronen der fünften versteckten Schicht 135, mit Neuronen der sechsten versteckten Schicht 136 und mit Neuronen der siebten versteckten Schicht 137 verbunden.

Neuronen der vierten Teilausgangsschicht 144 sind gemäß der Ausgangs-Verbindungsmatrix C jeweils mit Neuronen der fünften versteckten Schicht 135, mit Neuronen der sechsten versteckten Schicht 136, mit Neuronen der siebten versteckten Schicht 137 und mit Neuronen der achten versteckten Schicht 138 verbunden.

An den Neuronen der Teilausgangsschichten 141, 142, 143 und 144 sind die Ausgangsgrößen für jeweils einen Zeitpunkt t+1, t+2, t+3, und t+4 abgreifbar ($y_{t+1}$, $y_{t+2}$, $y_{t+3}$, $y_{t+4}$).

Damit ist eine Vorhersage von vier jeweils um einen vorgebbaren Zeitschritt aufeinanderfolgende Folgezustände des dynamischen Prozesses möglich, und damit Zustände des dynamischen Prozesses über einen langen Zeitraum prognostizierbar (overshooting).

Die Ausgangs-Verbindungsmatrix C wird derart bestimmt, daß ein Gewicht der Ausgangs-Verbindungsmatrix den Wert eins aufweist, die anderen Gewichte der Ausgangs-Verbindungsmatrix C aber den Wert null aufweisen.

Den besonderen Vorteil, den die in **Fig.1b** dargestellte Anordnung insbesondere durch ihre Struktur aufweist, liegt darin, daß die Anordnung unter Verwendung von nur wenigen Trainingsdaten ein effizientes Training ermöglicht. Dies ist insbesondere dadurch möglich, da durch die jeweils gleichen Gewichte in den Verbindungsmatrizen A, B und C wenige Gewichtsparameter eingestellt werden müssen sowie sich durch die besondere Form der Ausgangs-Verbindungsmatrix C eine weitere Vereinfachung des Trainingsverfahren ergibt.

Ein weiterer bedeutender Vorteil, den die Anordnung aufweist, liegt darin, daß nur solche Eingangs- und Ausgangsneuronenschichten verwendet werden, an denen für die Beschreibung der Dynamik des dynamischen Prozesses maßgebliche Informationen angelegt oder abgegriffen werden.

Für ein Training der oben beschriebenen Anordnung wird ein Verfahren auf der Basis eines Back-Propagation-Verfahrens, wie es in [1] beschrieben ist, verwendet.

Bei dem aus [1] bekannten Verfahren wird in der Trainingsphase folgende Kostenfunktion E minimiert:

$$E = \frac{1}{T} \sum_{t=1}^{T} \left( y_t - y_t^d \right)^2 \rightarrow \min_{f,g}, \tag{4}$$

wobei mit T eine Anzahl berücksichtigter Zeitpunkte bezeichnet wird.

Für ein Training der oben beschriebenen Anordnung mit einer im folgenden beschriebenen Gesamtkostenfunktion E' wird die Kostenfunktion E mit einer Kostenfunktion F erweitert. Damit wird die Anordnung derart trainiert, daß bei einer Modellierung der Dynamik durch die trainierte Anordnung eine vorgegebene Bedingung, wie beispielsweise ein geglätteter Verlauf des dynamischen Prozesses in einem vorgegebenen Raum, in dem "innere" Zustände des beschriebenen dynamischen Prozesses repräsentiert werden, berücksichtigt wird.

Unter Verwendung der Kostenfunktion F zur Messung einer Krümmung einer in einem Zustandsraum S, in welchen die "inneren" Systemzustände $s_{t-3}$, $s_{t-2}$, $s_{t-1}$, $s_t$, $s_{t+1}$, $s_{t+2}$, $s_{t+3}$ und $s_{t+4}$ beschrieben werden, zu beschreibenden Trajektorie, welche Kostenfunktion F gemäß folgender Vorschrift gebildet wird:

$$F = \frac{1}{T} \sum_{t=1}^{T} \frac{\left( s_{t+1} - 2s_t + s_{t-1} \right)^2}{\left( s_{t+1} - s_t \right)^2 + \left( s_t - s_{t-1} \right)^2}, \tag{5}$$

wird die Gesamtkostenfunktion E' gebildet, unter deren Verwendung das neuronale Netz mit einem Trainingsdatensatz, der durch Messung von Größen in dem chemischen Reaktor 400 gewonnen wird, trainiert wird, wobei die Gesamtkostenfunktion E' gemäß folgender Vorschrift gebildet wird:

$$E' = \frac{1}{T} \sum_{t=1}^{T} \left( y_t - y_t^d \right)^2 + \frac{\left( s_{t+1} - 2s_t + s_{t-1} \right)^2}{\left( s_{t+1} - s_t \right)^2 + \left( s_t - s_{t-1} \right)^2} \rightarrow \min_{f,g}. \tag{6}$$

Als Trainingsverfahren wird das Backpropagation-Verfahren eingesetzt. Der Trainingsdatensatz wird auf folgende Weise aus dem chemischen Reaktor 400 gewonnen.

Es werden mit dem Meßgerät 407 zu vorgegebenen Eingangsgrößen Konzentrationen gemessen und dem Rechner 409 zugeführt, dort digitalisiert und als Zeitreihenwerte $x_t$ in einem Speicher gemeinsam mit den entsprechenden Eingangsgrößen, die zu den gemessenen Größen korrespondieren, gruppiert.

Die Anordnung aus **Fig.1b** wird unter Verwendung des Trainingsdatensatzes und der Gesamtkostenfunktion trainiert.

Die gemäß dem oben beschriebenen Trainingsverfahren trainierte Anordnung aus **Fig.1b** wird zur Ermittlung chemischer Größen im chemischen Reaktor 400 eingesetzt derart, daß für eine Eingangsgröße zu einem Zeitpunkt t-1 und eine Eingangsgröße zu einem Zeitpunkt t Prognosegrößen $x_{t+1}$, $x_{t+2}$, $x_{t+3}$ und $x_{t+4}$ in einer Anwendungsphase von der Anordnung ermittelt werden, die anschließend als Steuergrößen nach einer eventuellen Aufbereitung der ermittelten Größen als Steuergrößen 420, 421 dem Steuerungsmittel 405 zur Steuerung des Rührers 402 oder auch einer Zuflußsteuereinrichtung 430 zur Steuerung des Zuflusses weiterer chemischer Substanzen 403 in dem chemischen Reaktor 400 verwendet werden (vgl. **Fig.4**).

Durch die Anordnung und durch das Trainieren der Anordnung wird ferner erreicht, daß eine in dem Zustandsraum ermittelte Trajektorie, welche einem Rauschen unterliegt, in einem üblichen Verfahren und einer daraus resultierenden Skalierung nicht zu einer brauchbaren Ermittlung einer dem Prozeß zugrunde liegenden Dynamik geeignet ist.

Durch die Möglichkeit, eine Glattheitsbedingung in einem weiteren Raum zu berücksichtigen, wird in dem Zustandsraum nunmehr eine Dynamik entlang einer veränderten Skalierung erreicht, derart, daß der Verlauf der Trajektorie eine größere Glattheit aufweist und somit Rauschen die Ermittlung der Dynamik nicht mehr in dem Maße behindert.

**2. Ausführungsbeispiel: Mietpreisprognose**

Bei der in **Fig.3** dargestellte Anordnung können Zwischenzustände einer Dynamik, die einem dynamischen Prozesses zugrunde liegt, bzw. Zwischenzustände des dynamischen Prozesses ermittelt werden.

Unter einem Zwischenzustand einer Dynamik ist ein Zustand zu verstehen, der zeitlich um einen vorgebbaren Zeitschritt verschoben auf einen aktuellen Zustand des dynamischen Prozesses folgt, wobei der vorgebbare Zeitschritt ein Teiler eines Zeitschritts ist, welcher durch eine Zeitreihe, gebildet durch Eingangsgrößen, vorgegeben ist.

Eine derartige Ermittlung von Zwischenzuständen eines dynamischen Prozesses wird als ein sogenanntes "undershooting" bezeichnet.

Die in **Fig.3** dargestellte Anordnung wird für eine Mietpreisprognose verwendet.

Die Eingangsgröße $u_t$ setzt sich in diesem Fall zusammen aus Angaben über einen Mietpreis, einem Wohnraumangebot, einer Inflation und einer Arbeitslosenrate, welche Angaben bezüglich eines zu untersuchenden Wohngebiets jeweils am Jahresende (Dezemberwerte) ermittelt werden. Somit ist die Eingangsgröße ein vierdimensionaler Vektor. Eine Zeitreihe der Eingangsgrößen, welche aus mehreren zeitlich aufeinanderfolgenden Vektoren bestehen, weißt Zeitschritte von jeweils einem Jahr auf.

Ziel der im weiteren beschriebenen Modellierung einer Mitpreisbildung ist die Prognose eines Mietpreises für die folgenden drei Jahre bezüglich eines aktuellen Zeitpunkts, wobei der Mietpreis jeweils für einen Drei-Monats-Zeitschritt (je-weils für ein 1./2./3. und 4. Quartal des ersten, zweiten sowie dritten Jahres) bestimmt wird ("undershooting").

Dabei stellt der Zustand des dynamischen Prozesses der Mietpreisbildung jeweils für das 1./2. und 3. Quartal des ersten, zweiten und dritten Jahres einen Zwischenzustand dar. Die Zustände, die der dynamische Prozeß jeweils für das 4. Quartal des ersten, zweiten und dritten Jahres aufweist, entsprechen jeweils in ihrem Zeitschritt dem Zeitschritt, den die Zeitreihe der Eingangsgrößen aufweist.

Die Beschreibung des dynamischen Prozesses der Mietpreisbildung erfolgt unter Verwendung der im weiteren beschriebenen und in der **Fig.3** dargestellten Anordnung.

Die in **Fig.3** dargestellte Anordnung 300 weist eine Eingangsschicht 321 auf, die eine vorgebbare Anzahl Eingangs-Rechenelemente enthalten, denen die Eingangsgrößen $u_t$ zu vorgebbaren Zeitpunkten t, d.h. im weiteren beschriebene Zeitreihenwerte mit vorgegebenen Zeitschritten, anlegbar sind.

Eingangs-Rechenelemente, d.h. Eingangsneuronen, sind über variable Verbindungen mit Neuronen einer vorgebbaren Anzahl versteckter Schichten 305 (dargestellt 13 verdeckte Schichten) verbunden.

Dabei sind Neuronen einer ersten versteckten 331 Schicht mit Neuronen der ersten Eingangsschicht 321 verbunden.

Die Gewichte der Verbindung zwischen der ersten 331 versteckten Schicht mit der ersten 321 Eingangsschicht sind in einer ersten Verbindungsmatrix B enthalten.

Ferner sind die Neuronen der ersten versteckten Schicht 331 mit ihren Ausgängen mit Eingängen von Neuronen einer zweiten versteckten Schicht 332 gemäß einer durch eine zweite Verbindungsmatrix A gegebene Struktur verbunden. Die Neuronen der zweiten versteckten Schicht 332 sind mit ihren Ausgängen mit Eingängen von Neuronen einer dritten versteckten Schicht 333 gemäß einer durch die zweite Verbindungsmatrix A gegebene Struktur verbunden. Die Neuronen der dritten versteckten Schicht 333 sind mit ihren Ausgängen mit Eingängen von Neuronen einer vierten versteckten Schicht 334 gemäß einer durch die zweite Verbindungsmatrix A gegebene Struktur verbunden. Die Neuronen der vierten versteckten Schicht 334 sind mit ihren Ausgängen mit Eingängen von Neuronen einer fünften versteckten Schicht 335 gemäß einer durch die zweite Verbin-5 dungsmatrix A gegebene Struktur verbunden. Die Neuronen der fünften versteckten Schicht 335 sind mit ihren Ausgängen mit Eingängen von Neuronen einer sechsten versteckten Schicht 336 gemäß einer durch die zweite Verbindungsmatrix A gegebene Struktur verbunden. Die Neuronen der sechsten versteckten Schicht 336 sind mit ihren Ausgängen mit Eingängen von Neuronen einer siebten versteckten Schicht 337 gemäß einer durch die zweite Verbindungsmatrix A gegebene Struktur verbunden. Die Neuronen der siebten versteckten Schicht 337 sind mit ihren Ausgängen mit Eingängen von Neuronen einer achten versteckten Schicht 338 gemäß einer durch die zweite Verbindungsmatrix A gegebene Struktur verbunden. Die Neuronen der achten versteckten Schicht 338 sind mit ihren Ausgängen mit Eingängen von Neuronen einer neunten versteckten Schicht 339 gemäß einer durch die zweite Verbindungsmatrix A gegebene Struktur verbunden. Die Neuronen der neunten versteckten Schicht 339 sind mit ihren Ausgängen mit Eingängen von Neuronen einer zehnten versteckten Schicht 360 gemäß einer durch die zweite Verbindungsmatrix A gegebene Struktur verbunden. Die Neuronen der zehnten versteckten Schicht 360 sind mit ihren Ausgängen mit Eingängen von Neuronen einer elften versteckten Schicht 361 gemäß einer durch die zweite Verbindungsmatrix A gegebene Struktur verbunden. Die Neuronen der elften versteckten Schicht 361 sind mit ihren Ausgängen mit Eingängen von Neuronen einer zwölften versteckten Schicht 362 gemäß einer durch die zweite Verbindungsmatrix A gegebene Struktur verbunden. Die Neuronen der zwölften versteckten Schicht 362 sind mit ihren Ausgängen mit Eingängen von Neuronen einer dreizehnten versteckten Schicht 363 gemäß einer durch die zweite Verbindungsmatrix A gegebene Struktur verbunden.

In den versteckten Schichten, der ersten bis dreizehnten versteckten Schicht 331-339 und 360-363 werden jeweils "innere" Zustände oder "innere" Systemzustände $s_t$, $s_{t+1}$, ..., $s_{t+12}$ eines durch die Anordnung beschriebenen dynamischen Prozesses an dreizehn aufeinanderfolgenden Zeitpunkten t, t+1, ..., t+12 repräsentiert.

Dabei werden jeweils durch die zweite 332, dritte 333, vierte 334 und sechste 336, siebte 337, achte 338 sowie zehnte 360, elfte 361, und zwölfte 362 verdeckte Schicht die Zwischenzustände des dynamischen Prozesses repräsentiert. Die erste 331, fünfte 335, neunte 339 und dreizehnte 363 verdeckte Schicht repräsentieren jeweils die Zustände des dynamischen Prozesses, die jeweils einem Zeitschritt, der durch die Zeitreihe der Eingangsgrößen vorgegeben ist, entsprechen.

Die Angaben in den Indizes in den jeweiligen Schichten geben jeweils den Zeitpunkt t, t+1, ..., t+12 an, auf die sich jeweils die an den Ausgängen der jeweiligen Schicht abgreifbaren bzw. zuführbaren Signale ($u_t$) beziehen.

Eine Ausgangsschicht 320 weist zwölf Teilausgangsschichten, eine erste Teilausgangsschicht 341, eine zweite Teilausgangsschicht 342, eine dritte Teilausgangsschicht 343, eine vierte Teilausgangsschicht 344, eine fünfte Teilausgangsschicht 345, eine sechste Teilausgangsschicht 346, eine siebte Teilausgangsschicht 347, eine achte Teilausgangsschicht 348, eine neunte Teilausgangsschicht 349, eine zehnte Teilausgangsschicht 370, eine elfte Teilausgangsschicht 371 und eine zwölfte Teilausgangsschicht 372 auf.

Neuronen der ersten Teilausgangsschicht 341 sind gemäß einer durch eine Ausgangs-Verbindungsmatrix C gegebenen Struktur mit Neuronen der zweiten versteckten Schicht 332 verbunden. Neuronen der zweiten Teilausgangsschicht 342 sind ebenfalls gemäß der durch die Ausgangs-Verbindungsmatrix C gegebenen Struktur jeweils mit Neuronen der zweiten versteckten Schicht 332 und mit Neuronen der dritten versteckten Schicht 333 verbunden.

Neuronen der dritten Teilausgangsschicht 343 sind gemäß der Ausgangs-Verbindungsmatrix C jeweils mit Neuronen der zweiten versteckten Schicht 332, mit Neuronen der dritten versteckten Schicht 333 und mit Neuronen der vierten versteckten Schicht 334 verbunden.

Äquivalent gilt diese Art der Verbindungsstruktur jeweils für die vierte 344, die fünfte 345, die sechste 346, die siebte 347, die achte 348, die neunte 349, die zehnte 370, die elfte 371 und die zwölfte 372 Teilausgangsschicht.

An den Neuronen der Teilausgangsschichten 341-349 und 370-372 sind die Ausgangsgrößen für jeweils einen Zeitpunkt t+1, t+2, ..., t+12 abgreifbar ($y_{t+1}$, $y_{t+2}$, ..., $y_{t12}$).

Ferner sind zusätzlich zu der Eingangsschicht 321 aber nur die vierte Teilausgangsschicht 344, die achte Teilausgangsschicht 348 und die zwölfte Teilausgangsschicht 372 sogenannte "error-produzierende" Neuronenschichten. Das heißt, daß bei einem Training der Anordnung nur an diesen Neuronenschichten error-Signale erzeugt werden.

Damit ist eine Vorhersage von 12 jeweils um einen vorgebbaren Zeitschritt (Drei-Monats-Zeitschritt) folgende Folgezustände des dynamischen Prozesses möglich, und damit Zustände des dynamischen Prozesses über einen großen Zeitraum prognostizierbar.

Die Ausgangs-Verbindungsmatrix C wird derart bestimmt, daß ein Gewicht der Ausgangs-Verbindungsmatrix den Wert eins aufweist, die anderen Gewichte der Ausgangs-Verbindungsmatrix C aber den Wert null aufweisen.

Den besonderen Vorteil, den die in **Fig.3** dargestellte Anordnung insbesondere durch ihre Struktur aufweist, liegt darin, daß die Anordnung unter Verwendung von nur wenigen Trainingsdaten ein effizientes Training ermöglicht. Dies ist insbesondere dadurch möglich, da durch die jeweils gleichen Gewichte in den Verbindungsmatrizen A, B und C wenige Gewichtsparameter eingestellt werden müssen sowie sich durch die besondere Form der Ausgangs-Verbindungsmatrix C eine weitere Vereinfachung des Trainingsverfahren ergibt.

Ein weiterer bedeutender Vorteil, den die Anordnung aufweist, liegt darin, daß durch die besondere Struktur der Anordnung Zustände eines dynamischen Prozesses in einem engen Zeitraster beschrieben werden können, obwohl Eingangsgrößen, die als eine Zeitreihe aufgearbeitet wurden, ein im Vergleich zu den Zwischenzuständen gröberes Zeitraster aufweisen ("undershooting").

Das Zeitraster der Zwischenzustände kann dadurch weiter verfeinert werden, daß weitere verdeckte Schichten mit jeweils einer verbundenen Teilausgangsschicht in einer Anordnung verwendet werden, wobei allerdings die weiteren Teilausgangsschichten keine "error-produzierenden" Neuronenschichten sind.

Mathematisch gesehen entspricht eine Erhöhung einer Verfeinerung des Zeitrasters von Zwischenzuständen eines dynamischen Prozesses einem Übergang von einer zeitdiskreten Beschreibung des dynamischen Prozesses zu einer Beschreibung des dynamischen Prozesses durch ein kontinuierliches Differenzialgleichungssystem.

Die Vorgehensweise für ein Training der oben beschriebenen Anordnung ist in [4] beschrieben.

Dabei werden für das Training der Anordnung nur die "error-produzierenden" Neuronenschichten verwendet.

In [4] werden Verfahren und Anordnungen miteinander verbundener Rechenelemente zur Ermittlung einer Dynamik, die einem dynamischen Prozeß zugrunde liegt, vorgeschlagen, bei denen bei einer Modellierung der Dynamik eine vorgegebene Bedingung, wie beispielsweise ein geglätteter Verlauf des dynamischen Prozesses in einem vorgegebenen Raum, in dem "innere" Zustände des beschriebenen dynamischen Prozesses repräsentiert werden, berücksichtigbar ist.

Als Trainingsverfahren wird das Backpropagation-Verfahren eingesetzt.

Im weiteren werden einige Alternativen zu dem oben beschriebenen Ausführungsbeispiel aufgezeigt.

Die in dem ersten Ausführungsbeispiel beschriebene Anordnung kann auch für die Ermittlung einer Dynamik eines Elektro-Kardio-Gramms (EKG) eingesetzt werden. Damit lassen sich frühzeitig Indikatoren, die auf ein erhöhtes Herzinfarktrisiko hinweisen, bestimmen. Als Eingangsgröße wird eine Zeitreihe aus an einem Patienten gemessenen EKG-Werten verwendet.

Die in dem zweiten Ausführungsbeispiel beschriebene Anordnung kann auch für die Prognose einer makroökonomischer Dynamik, wie beispielsweise eines Wechselkursverlaufs, oder anderen ökonomischer Kennzahlen, wie beispielsweise eines Börsenkurses, eingesetzt werden. Bei einer derartigen Prognose wird eine Eingangsgröße aus Zeitreihen relevanter makroökonomischer bzw. ökonomischer Kennzahlen, wie beispielsweise Zinsen, Währungen oder Inflationsraten, gebildet.

Als Gesamtkostenfunktion E' können alternativ auch folgende Kostenfunktionen gewählt werden:

$$E' = \frac{1}{T} \sum_{t=1}^{T} \left(y_t - y_t^d\right)^2 + \frac{\|s_{t+1} - s_t\| + \|s_t - s_{t-1}\|}{\|(s_{t+1} - s_t) + (s_t - s_{t-1})\|} \rightarrow \min_{f,g}, \quad (7)$$

$$E' = \frac{1}{T} \sum_{t=1}^{T} \left(y_t - y_t^d\right)^2 + \frac{(s_{t+1} - s_t) \cdot (s_t - s_{t-1})}{\|s_{t+1} - s_t\| \cdot \|s_t - s_{t-1}\|} \rightarrow \min_{f,g}. \quad (8)$$

Ferner ist die Bedingung nicht auf eine Glattheitsbedingung beschränkt.

Diese Tatsache kann vorteilhaft bei der Prognose makroökonomischer bzw. ökonomischer Dynamiken eingesetzt werden, da es sich bei einem makroökonomischen oder ökonomischen System um ein emergentes System handelt.

Ferner kann auch eine verdeckte Schicht, deren Neuronen sowohl mit Neuronen einer zu der verdeckten Schicht zugehörigen Eingangsschicht als auch mit Neuronen eines zu der verdeckten Schicht zugehörigen Ausgangsschicht verbunden sind. Die Verbindung der verdeckten Schicht mit einer anderen verdeckten Schicht erfolgt in der in den Ausführungsbeispielen beschrieben Weise. Die Verbindungsmatrizen A, B und C weisen jeweils die in den Ausführungsbeispielen beschrieben Formen auf.

Eine mögliche Realisierung der oben beschriebenen Ausführungsbeispiele können mit dem Programm SENN, Version 2.3 durchgeführt werden.

In diesem Dokument sind folgende Veröffentlichungen zitiert:

[1] S. Hayken, Neural Networks: A Comprehensive Foundation, Mc Millan College Publishing Company, Second Edition, ISBN 0-13-273350-1, S. 732-789, 1999.

[2] David E. Rumelhart et al., Parallel Distributed Processing, Explorations in the Microstructure of Cognition, Vol. 1: Foundations, A Bradford Book, The MIT Press, Cambrigde, Massachusetts, London, England, 1987

[3] H. Rehkugler und H. G. Zimmermann, Neuronale Netze in der Ökonomie, Grundlagen und finanzwirtschaftliche Anwendungen, Verlag Franz Vahlen München, ISBN 3-8006-1871-0, S. 3-90, 1994.

[4] S. Hayken, Neural Networks: A Comprehensive Foundation, Mc Millan College Publishing Company, ISBN 0-02-352761-7, S. 498-533, 1994.

[5] US-A-5 761 389 (Lawrence Stephen Robert et al.)

[6] Bishop C., Neural Networks for Pattern Recognition, Clarendon Press, Oxford, Seite 302 bis 305.

**Patentansprüche**

**1.** Anordnung miteinander verbundener Rechenelemente zur Beschreibung zeitlich aufeinanderfolgender Zustände eines dynamischen Systems, welches eine Eingangsgröße auf eine Ausgangsgröße abbildet,

- mit mindestens einer ersten Unteranordnung mit einem zugehörigen ersten Eingangsrechenelement (121), dem ein Zeitreihenwert, welcher die Eingangsgröße des dynamischen Systems in einem ersten Zustandsraum zu einem ersten Zeitpunkt beschreibt, zuführbar ist, und einem zugehörigen ersten Zwischenrechenelement (131), mit welchem ein Zustand des Systems in einem zweiten Zustandsraum zu dem ersten Zeitpunkt beschreibbar ist, wobei das erste Eingangsrechenelement (121) und das erste Zwischenrechenelement (131) miteinander verbunden sind,
- mit mindestens zwei zweiten Unteranordnungen mit jeweils einem zugehörigen zweiten Zwischenrechenelement (132, 133), mit welchem ein Zustand des Systems in dem zweiten Zustandsraum zu einem zweiten Zeitpunkt beschreibbar ist, und mit jeweils einem zugehörigen ersten Ausgangsrechenelement (141, 142), an dem ein Ausgangszeitreihenwert, welcher die Ausgangsgröße des dynamischen Systems zu dem zweiten Zeitpunkt beschreibt, abgreifbar ist, wobei das zweite Zwischenrechenelement (132, 133) und das erste Ausgangsrechenelement (141, 142) miteinander verbunden sind,

  a) wobei die zwei zweiten Unteranordnungen durch eine Kopplung der zweiten Zwischenrechenelemente (132, 133) miteinander verbunden sind,
  b) wobei die erste Unteranordnung und genau eine zweite Unteranordnung durch Kopplung der Zwischenrechenelemente (131, 132) miteinander verbunden sind,
  c) wobei Gewichte, welche jeweils einer Verbindung zwischen zwei Zwischenrechenelementen (131, 132, 133) zugeordnet sind, untereinander gleich sind,
  d) wobei Gewichte, welche jeweils einer Verbindung zwischen einem Zwischenrechenelement (132, 133) und einem Ausgangsrechenelement (141, 142) zugeordnet sind, untereinander gleich sind,

  sodass die erste Unteranordnung, die mit der ersten Unteranordnung verbundene zweite Unteranordnung und die andere zweite Unteranordnung die zeitlich aufeinanderfolgenden Zustände des dynamischen Systems repräsentieren.

2. Anordnung nach Anspruch 1,
   mit weiteren zweiten Unteranordnungen, von denen jeweils zwei durch Kopplung der zweiten Zwischenelemente miteinander verbunden sind.

3. Anordnung nach Anspruch 1 oder 2,
   mit einer weiteren ersten Unteranordnung, die mit der ersten Unteranordnung durch Kopplung der ersten Zwischenrechenelemente verbunden ist.

4. Anordnung nach Anspruch 3,
   bei der ein Ausgangsrechenelement mit mehreren Zwischenrechenelementen verbunden ist.

5. Anordnung nach einem der Ansprüche 1 bis 4,
   bei der zwischen dem ersten und dem zweiten der zeitlich aufeinanderfolgenden Zustände ein erstes Zeitintervall liegt, welches einen ersten vorgebbaren Zeitschritt aufweist, und zwischen dem zweiten und dem dritten Zustand der zeitlich aufeinanderfolgenden Zuständen ein zweites Zeitintervall liegt, welches einen vorgebbaren zweiten Zeitschritt aufweist.

6. Anordnung nach Anspruch 5,
   bei der der erste vorgebbare Zeitschritt und der zweite vorgebbare Zeitschritt untereinander gleich sind.

7. Anordnung nach Anspruch 5,
   bei der der zweite vorgebbare Zeitschritt ein Vielfaches des ersten vorgebbaren Zeitschritts ist.

8. Anordnung nach einem der Ansprüche 5 bis 7,
   bei der der erste und/oder der zweite vorgebbare Zeitschritt ein Teiler eines vorgegebenen Zeitreihenzeitschritts sind/ist, welcher durch eine Zeitreihe, welche den Zeitreihenwert umfaßt, bestimmt wird.

9. Anordnung nach einem der Ansprüche 1 bis 8,
   bei der die erste Unteranordnung einen aktuellen Zustand des dynamischen Systems und die zweiten Unteranordnungen jeweils einen zukünftigen Zustand des dynamischen Systems repräsentieren.

10. Anordnung nach Anspruch 9,

bei der die weitere erste Unteranordnung einen bezüglich des aktuellen Zustands um ein drittes Zeitintervall vorangegangenen, zeitlich älteren Zustands des dynamischen Systems repräsentiert.

11. Anordnung nach einem der vorangehenden Ansprüche,
    bei der zumindest ein Teil der Rechenelemente künstliche Neuronen sind.

12. Anordnung nach einem der vorangehenden Ansprüche,
    bei der nur ein Gewicht von Gewichten, welche jeweils einer Verbindung zwischen einem Zwischenrechenelement und einem Ausgangsrechenelement zugeordnet sind, einen Wert eins aufweist und die anderen Gewichte von den Gewichten jeweils einen Wert null aufweisen.

13. Anordnung nach einem der vorangehenden Ansprüche, eingesetzt zur Ermittlung einer Dynamik eines dynamischen Prozesses, wobei die Dynamik durch eine Änderung der zeitlich aufeinanderfolgenden Zuständen des dynamischen Systems beschrieben wird.

14. Anordnung nach Anspruch 13,
    mit einer Meßanordnung zur Erfassung physikalischer Signale, mit denen der dynamische Prozeß beschrieben wird.

15. Anordnung nach Anspruch 13 oder 14,
    eingesetzt zur Ermittlung der Dynamik eines dynamischen Prozesses in einem chemischen Reaktor.

16. Anordnung nach Anspruch 13 oder 14,
    eingesetzt zur Ermittlung der Dynamik eines Elekro-Kardio-Gramms.

17. Anordnung nach Anspruch 13 oder 14,
    eingesetzt zur Ermittlung der Dynamik eines ökonomischen Prozesses.

18. Verfahren zur rechnergestützten Ermittlung zeitlich aufeinanderfolgender Zustände eines dynamischen Systems, welches eine Eingangsgröße auf eine Ausgangsgröße abbildet, unter Verwendung einer Anordnung nach Anspruch 1 mit folgenden Schritten:

    - ein Zeitreihenwert (121), welcher die Eingangsgröße des dynamischen Systems in einem ersten Zustandsraum zu einem ersten Zeitpunkt beschreibt, wird in einen zweiten Zustandsraum zu einem ersten transformierten Zeitreihenwert (131) desselben ersten Zeitpunkts transformiert,
    - der erste transformierte Zeitreihenwert (131) wird in dem zweiten Zustandsraum unter Verwendung einer Zwischentransformation auf einen zweiten transformierten Zeitreihenwert (132) zu einem zweiten Zeitpunkt abgebildet,
    - der zweite transformierte Zeitreihenwert (132) wird in dem zweiten Zustandsraum unter Verwendung der Zwischentransformation auf einen dritten transformierten Zeitreihenwert (133) zu einem dritten Zeitpunkt abgebildet,
    - der zweite transformierte Zeitreihenwert (132) wird von dem zweiten Zustandsraum unter Verwendung einer Ausgangstransformation auf einen ersten Ausgangszeitreihenwert (141), welcher die Ausgangsgröße des dynamischen Systems zu dem zweiten Zeitpunkt beschreibt, in den ersten Zustandsraum rücktransformiert,
    - der dritte transformierte Zeitreihenwert (133) wird von dem zweiten Zustandsraum unter Verwendung der Ausgangstransformation auf einen zweiten Ausgangszeitreihenwert (142), welcher die Ausgangsgröße des dynamischen Systems zu dem dritten Zeitpunkt beschreibt, in den ersten Zustandsraum rücktransformiert,

    wobei die Zeitreihenwerte (121, 131) des ersten Zeitpunkts, die Zeitreihenwerte (132, 141) des zweiten Zeitpunkts und die Zeitreihenwerte (133, 142) des dritten Zeitpunkts die zeitlich aufeinanderfolgenden Zustände des dynamischen Systems repräsentieren.

19. Verfahren nach Anspruch 18,
    bei dem die Zeitreihenwerte Vektoren vorgebbarer Dimension sind.

20. Verfahren nach Anspruch 18 oder 19,
    eingesetzt zur Ermittlung einer Dynamik eines dynamischen Systems, wobei die Dynamik aus einer Änderung der zeitlich aufeinanderfolgenden Zuständen des dynamischen Systems ermittelt wird.

**21.** Verfahren nach einem der Ansprüche 18 bis 20,
eingesetzt zu einer Prognose eines erste und eines zweiten zukünftigen Zustands des dynamischen Systems, wobei die Zeitreihenwerte des ersten Zeitpunkts einen aktuellen Zustand des dynamischen Systems repräsentieren, die Zeitreihenwerte des zweiten Zeitpunkts den ersten zukünftigen Zustand des dynamischen Systems sowie die Zeitreihenwerte des dritten Zeitpunkts den zweiten zukünftigen Zustand des dynamischen Systems beschreiben und aus den Zeitreihenwerten des zweiten und des dritten Zeitpunkts die Prognose ermittelt wird.

**22.** Verfahren zum rechnergestützten Trainieren einer Anordnung miteinander verbundener Rechenelemente zur Beschreibung zeitlich aufeinanderfolgender Zustände eines dynamischen Systems, welches eine Eingangsgröße auf eine Ausgangsgröße abbildet, mit folgender Struktur:

- mit mindestens einer ersten Unteranordnung mit einem zugehörigen ersten Eingangsrechenelement (121), dem ein Zeitreihenwert, welcher die Eingangsgröße des dynamischen Systems in einem ersten Zustandsraum zu einem ersten Zeitpunkt beschreibt, zuführbar ist, und einem zugehörigen ersten Zwischenrechenelement (131), mit welchem ein Zustand des Systems in einem zweiten Zustandsraum zu dem ersten Zeitpunkt beschreibbar ist, wobei das erste Eingangsrechenelement (121) und das erste Zwischenrechenelement (131) miteinander verbunden sind,
- mit mindestens zwei zweiten Unteranordnungen mit jeweils einem zugehörigen zweiten Zwischenrechenelement (132, 133), mit welchem ein Zustand des Systems in dem zweiten Zustandsraum zu einem zweiten Zeitpunkt beschreibbar ist, und mit jeweils einem zugehörigen ersten Ausgangsrechenelement (141, 142), an dem ein Ausgangszeitreihenwert, welcher die Ausgangsgröße des dynamischen Systems zu dem zweiten Zeitpunkt beschreibt, abgreifbar ist, wobei das zweite Zwischenrechenelement (132, 133) und das erste Ausgangsrechenelement (141, 142) miteinander verbunden sind,

  a) wobei die zwei zweiten Unteranordnungen durch eine Kopplung der zweiten Zwischenrechenelemente (132, 133) miteinander verbunden sind,
  b) wobei die erste Unteranordnung und genau eine zweite Unteranordnung durch Kopplung der Zwischenrechenelemente (131, 132) miteinander verbunden sind,
  c) wobei Gewichte, welche jeweils einer Verbindung zwischen zwei Zwischenrechenelementen (131, 132, 133) zugeordnet sind, untereinander gleich sind,
  d) wobei Gewichte, welche jeweils einer Verbindung zwischen einem Zwischenrechenelement (132, 133) und einem Ausgangsrechenelement (141, 142) zugeordnet sind, untereinander gleich sind,

sodass die erste Unteranordnung, die mit der ersten Unteranordnung verbundene zweite Unteranordnung und die andere zweite Unteranordnung die zeitlich aufeinanderfolgenden Zustände des dynamischen Systems repräsentieren,
bei dem ein erstes Trainingsdatum als der Zeitreihenwert, ein zweites und ein drittes Trainingsdatum als die Ausgangszeitreihenwerte an die zu trainierende Anordnung angelegt werden und unter Verwendung eines Trainingsverfahren die veränderbaren Gewichte angepaßt werden.

## Claims

**1.** Arrangement of computation elements which are connected to one another in order to describe states of a dynamic system which follow one another in time, and which system maps an input variable onto an output variable,

- having at least one first subarrangement with an associated first input computation element (121), to which a time series value, which describes the input variable of the dynamic system in a first state space at a first time, can be supplied, and having an associated first intermediate computation element(131), by means of which a state of the system can be described in a second state space at the first time, with the first input computation element (121) and the first intermediate computation element (131) being connected to one another,
- having at least two second subarrangements each with an associated second intermediate computation element (132, 133), by means of which a state of the system can be described in the second state space at a second time, and each with an associated first output computation element (141, 142), on which an output time series value, which describes the output variable of the dynamic system at the second time, can be tapped off, with the second intermediate computation element (132, 133) and the first output computation element (141, 142) being connected to one another,

a) with the two second subarrangements being connected to one another by a coupling between the second intermediate computation elements (132, 133),

b) with the first subarrangement and one, and only one second subarrangement being connected to one another by coupling between the intermediate computation elements (131, 132),

c) with weights which are each associated with a connection between two intermediate computation elements (131, 132, 133) being equal to one another,

d) with weights which are each associated with a connection between an intermediate computation element (132, 133) and an output computation element (141, 142) being equal to one another,

so that the first subarrangement, the second subarrangement which is connected to the first subarrangement, and the other second subarrangement represent the states of the dynamic system which follow one another in time.

**2.** Arrangement according to Claim 1,
having further second subarrangements, which are each connected to one another by coupling between the second intermediate elements.

**3.** Arrangement according to Claim 1 or 2,
having a further first subarrangement, which is connected to the first subarrangement by coupling between the first intermediate computation elements.

**4.** Arrangement according to Claim 3,
in which one output computation element is connected to a number of intermediate computation elements.

**5.** Arrangement according to one of Claims 1 to 4,
in which there is a first time interval between the first and the second of the states which follow one another in time, which has a first time step which can be predetermined, and there is a second time interval between the second and third state of the states which follow one another in time, which has a second time step which can be predetermined.

**6.** Arrangement according to Claim 5,
in which the first time step which can be predetermined and the second time step which can be predetermined are equal to one another.

**7.** Arrangement according to Claim 5,
in which the second time step which can be predetermined is a multiple of the first time step which can be predetermined.

**8.** Arrangement according to one of Claims 5 to 7,
in which the first and/or the second time step(s) which can be predetermined are/is a devisor of a predetermined time series time step, which is defined by a time series which includes the time series value.

**9.** Arrangement according to one of Claims 1 to 8,
in which the first subarrangement represents a present state of the dynamic system, and the second subarrangements each represent a future state of the dynamic system.

**10.** Arrangement according to Claim 9,
in which the further first subarrangement represents a state at a previous time, preceding the present state by a third time interval, of the dynamic system.

**11.** Arrangement according to one of the preceding claims,
in which at least some of the computation elements are artificial neurons.

**12.** Arrangement according to one of the preceding claims,
in which only one weight of weights which are in each case associated with a connection between an intermediate computation element and an output computation element has the value unity, and the other weights of the weights each have the value 0.

**13.** Arrangement according to one of the preceding claims,

used for determining a dynamic response of a dynamic process, with the dynamic response being described by a variation in the states of the dynamic system which follow one another in time.

14. Arrangement according to Claim 13,
having a measurement arrangement for detecting physical signals, by means of which the dynamic process is described.

15. Arrangement according to Claim 13 or 14,
used for determining the dynamic response of a dynamic process in a chemical reactor.

16. Arrangement according to Claim 13 or 14,
used for determining the dynamic response of an electrocardiogram (EKG).

17. Arrangement according to Claim 13 or 14,
used for determining the dynamic response of an economic process.

18. Method for computer-aided determination of states of a dynamic system which follow one another in time, which system maps an input variable onto an output variable, using an arrangement according to Claim 1, comprising the following steps:

   - a time series value (121) which describes the input variable of the dynamic system in a first state space at a first time is transformed into a second state space to form a first transformed time series value (131) for the same first time,
   - the first transformed time series value (131) is mapped in the second state space onto a second transformed time series value (132) at a second time using an intermediate transformation,
   - the second transformed time series value (132) is mapped in the second state space onto a third transformed time series value (133) at a third time using the intermediate transformation,
   - the second transformed time series value (132) is transformed back from the second state space to a first output time series value (141) using an output transformation, which value describes the output variable of the dynamic system at the second time, in the first state space,
   - the third transformed time series value (133) is transformed back from the second state space to a second output time series value (142) using the output transformation, which value describes the output variable of the dynamic system at the time third, into the first state space,

with the time series values (121, 131) for the first time, the time series values (132, 141) for the second time and the time series values (133, 142) for the third time representing the states of the dynamic system which follow one another in time.

19. Method according to Claim 18,
in which the time series values are vectors whose dimensions can be predetermined.

20. Method according to Claim 18 or 19,
used for determining a dynamic response of a dynamic system, with the dynamic response being determined from a variation in the states of the dynamic system which follow one another in time.

21. Method according to one of Claims 18 to 20,
used for prediction of a first and a second future state of the dynamic system, with the time series values for the first time representing a present state of the dynamic system, the time series values for the second time describing the first future state of the dynamic system, and the time series values for the third time describing the second future state of the dynamic system, and the prediction being determined from the time series values of the second time and for the third time.

22. Method for computer-aided training of an arrangement of computation elements which are connected to one another in order to describe states of a dynamic system which follow one another in time, and which system maps an input variable onto an output variable, having the following structure:

   - having at least one first subarrangement with an associated first input computation element (121), to which a time series value, which describes the input variable of the dynamic system in a first state space at a first time, can be supplied, and having an associated first intermediate computation element (131), by means of which a state of the system can be described in a second state space at the first time, with the first input computation element (121) and the first intermediate computation element (131) being connected to one another,

- having at least two second subarrangements each with an associated second intermediate computation element (132, 133), by means of which a state of the system can be described in the second state space at a second time, and each having an associated first output computation element (141, 142), on which an output time series value, which describes the output variable of the dynamic system at the second time, can be tapped off, with the second intermediate computation element (132, 133) and the first output computation element (141, 142)) being connected to one another,

a) with the two second subarrangements being connected to one another by a coupling between the second intermediate computation elements (132, 133),
b) with the first subarrangement and one, and only one second subarrangement being connected to one another by coupling between the intermediate computation elements (131, 132)
c) with weights which are each associated with a connection between two intermediate computation elements (131, 132, 133) being equal to one another,
d) with weights which are each associated with a connection between an intermediate computation element (132,133) and an output computation element (141, 142) being equal to one another,

so that the first subarrangement, the second subarrangement which is connected to the first subarrangement, and the other second subarrangement represent the states of the dynamic system which follow one another in time, in which a first training data item is applied as the time series value to the arrangement to be trained and a second and a third training data item are applied as the output time series values to the arrangement to be trained, and the variable weights are adapted using a training method.

**Revendications**

1.  Configuration d'éléments informatiques interconnectés destinée à la description d'états, qui se succèdent dans le temps, d'un système dynamique qui reproduit une grandeur d'entrée en une grandeur de sortie, et ayant

    - au moins une première sous-configuration comportant un premier élément informatique d'entrée correspondant (121), auquel on peut appliquer une valeur de série chronologique, qui décrit la grandeur d'entrée du système dynamique dans un premier espace d'états à un premier instant, et un premier élément informatique intermédiaire correspondant (131), avec lequel on peut décrire un état du système dans un deuxième espace d'états au premier instant, le premier élément informatique d'entrée correspondant (121) et le premier élément informatique intermédiaire correspondant (131) étant interconnectés,
    - au moins deux deuxièmes sous - configurations comportant chacune un deuxième élément informatique intermédiaire correspondant (132, 133), avec lequel on peut décrire un état du système dans le deuxième espace d'états à un deuxième instant, et un premier élément informatique de sortie correspondant (141, 142), sur lequel il est possible de prélever une valeur de série chronologique de sortie, qui décrit la grandeur de sortie du système dynamique au deuxième instant, le deuxième élément informatique intermédiaire (132, 133) et le premier élément informatique de sortie (141, 142) étant interconnectés,

        a) les deux deuxièmes sous-configurations étant interconnectées par un couplage des deuxièmes éléments informatiques intermédiaires (132, 133),
        b) la première sous-configuration et, exactement, une deuxième sous-configuration étant interconnectées par un couplage des deuxièmes éléments informatiques intermédiaires (131, 132),
        c) des pondérations, qui sont affectées chacune à une connexion entre deux éléments informatiques intermédiaires (131, 132, 133), étant identiques l'une à l'autre,
        d) des pondérations, qui sont affectées chacune à une connexion entre un élément informatique intermédiaire (132, 133) et un élément informatique de sortie (141, 142), étant identiques l'une à l'autre,

    si bien que la première sous - configuration, la deuxième sons - configuration connectée à la première sous-configuration et l'autre deuxième sous-configuration représentent les états du système dynamique qui se succèdent dans le temps.

2.  Configuration selon la revendication 1

comportant d'autres deuxièmes sous-configurations, parmi lesquelles respectivement deux sont interconnectées grâce à un couplage des deuxièmes éléments informatiques.

**3.** Configuration selon la revendication 1 ou 2
comportant une autre première sous-configuration, qui est connectée à la première sous-configuration grâce à un couplage des premiers éléments informatiques intermédiaires.

**4.** Configuration selon la revendication 3
dans laquelle un élément informatique de sortie est connecté à plusieurs éléments informatiques intermédiaires.

**5.** Configuration selon l'une des revendications 1 à 4
dans laquelle il y a, entre le premier et le second état des états, qui se succèdent dans le temps, un premier intervalle de temps, qui représente un premier incrément dans le temps, qui peut être prédéterminé, et, entre le second et le troisième état des états, qui se succèdent dans le temps, un deuxième intervalle de temps, qui représente un deuxième incrément dans le temps, qui peut être prédéterminé.

**6.** Configuration selon la revendication 5
dans laquelle le premier incrément dans le temps, qui peut être prédéterminé, et le deuxième incrément dans le temps, qui peut être prédéterminé, sont égaux.

**7.** Configuration selon la revendication 5
dans laquelle le deuxième incrément dans le temps, qui peut être prédéterminé, est un multiple du premier incrément dans le temps, qui peut être prédéterminé.

**8.** Configuration selon l'une des revendications 5 à 7
dans laquelle le premier et/ou le deuxième incrément dans le temps, qui peuvent être prédéterminés, sont un diviseur d'un incrément dans le temps donné d'une série chronologique, lequel est déterminé par une série chronologique comportant la valeur de la série chronologique.

**9.** Configuration selon l'une des revendications 1 à 8
dans laquelle la première sous-configuration représente un état actuel du système dynamique et les deuxièmes sous-configurations représentent chacune un état futur du système dynamique.

**10.** Configuration selon la revendication 9
dans laquelle l'autre première sous-configuration représente un état du système dynamique, plus ancien dans le temps que l'état actuel et le précédant d'un troisième intervalle de temps.

**11.** Configuration selon l'une des revendications précédentes
dans laquelle au moins une partie des éléments informatiques sont des neurones artificiels.

**12.** Configuration selon l'une des revendications précédentes
dans laquelle une seule pondération parmi des pondérations, qui sont affectées chacune à une connexion entre un élément informatique intermédiaire et un élément informatique de sortie, a la valeur un et les autres pondérations parmi les pondérations ont chacune la valeur zéro.

**13.** Configuration selon l'une des revendications précédentes
utilisée pour déterminer une dynamique d'un processus dynamique, la dynamique étant décrite par une variation des états du système dynamique, qui se succèdent dans le temps.

**14.** Configuration selon la revendication 13
comportant un dispositif de mesure destiné à détecter des signaux physiques avec lesquels le processus dynamique est décrit.

**15.** Configuration selon la revendication 13 ou 14
utilisé pour la détermination de la dynamique d'un processus dynamique dans un réacteur chimique.

**16.** Configuration selon la revendication 13 ou 14
utilisé pour la détermination de la dynamique d'un électrocardiogramme.

**17.** Configuration selon la revendication 13 ou 14
utilisé pour la détermination de la dynamique d'un processus économique.

**18.** Procédé destiné à la détermination assistée par ordinateur d'états, qui se succèdent dans le temps, d'un système dynamique reproduisant une grandeur d'entrée sur une grandeur de sortie, en utilisant une configuration selon la revendication 1 et comprenant les étapes suivantes:

- une valeur de la série chronologique (121), qui décrit la grandeur d'entrée du système dynamique dans un premier espace d'états à un premier instant, est transformée, dans un deuxième espace d'états, pour donner une première valeur transformée de la série chronologique (131) du même premier instant,
- la première valeur transformée de la série chronologique (131) est reproduite, dans le deuxième espace d'états, en utilisant une transformation intermédiaire, sur une deuxième valeur transformée de la série chronologique (132) à un deuxième instant,
- la deuxième valeur transformée de la série chronologique (132) est reproduite, dans le deuxième espace d'états, en utilisant une transformation intermédiaire, sur une troisième valeur transformée de la série chronologique (133) à un troisième instant,
- la deuxième valeur transformée de la série chronologique (132) est transformée inverse dans le premier espace d'états, à partir du deuxième espace d'états, en utilisant une transformation de sortie, sur une première valeur de sortie de la série chronologique (141), laquelle décrit la grandeur de sortie du système dynamique au deuxième instant,
- la troisième valeur transformée de série chronologique (133) est transformée inverse dans le premier espace d'états, à partir du deuxième espace d'états, en utilisant une transformation de sortie, sur une deuxième valeur de sortie de la série chronologique (142), laquelle décrit la grandeur de sortie du système dynamique au troisième instant,

les valeurs de la série chronologique (121, 131) du premier instant, les valeurs de la série chronologique (132, 141) du deuxième instant et les valeurs de la série chronologique (133, 142) du troisième instant représentant les états du système dynamique qui se succèdent dans le temps.

**19.** Procédé selon la revendication 18
dans lequel les valeurs de la série chronologique sont des vecteurs dont la dimension peut être prédéterminée.

**20.** Procédé selon la revendication 18 ou 19
utilisé pour la détermination d'une dynamique d'un système dynamique, la dynamique étant déterminée à partir d'une variation des états du système dynamique qui se succèdent dans le temps.

**21.** Procédé selon la revendication 18 à 20
utilisé pour un pronostic d'un premier et d'un deuxième état futur du système dynamique, les valeurs de la série chronologique du premier instant représentant un état actuel du système dynamique, les valeurs de la série chronologique du deuxième instant décrivant le premier état futur du système dynamique et les valeurs de la série chronologique du troisième instant décrivant le deuxième état futur du système dynamique et le pronostic étant déterminé à partir des valeurs de la série chronologique du deuxième et du troisième instant.

**22.** Procédé destiné à l'apprentissage assisté par ordinateur d'une configuration d'éléments informatiques interconnectés destinée à la description d'états, qui se succèdent dans le temps, d'un système dynamique qui reproduit une grandeur d'entrée sur une grandeur de sortie, ayant la structure suivante:

- au moins une première sons - configuration comportant un premier élément informatique d'entrée correspondant (121), auquel on peut appliquer une valeur de série chronologique, qui décrit la grandeur d'entrée du système dynamique dans un premier espace d'états à un premier instant, et un premier élément informatique intermédiaire correspondant (131), avec lequel on peut décrire un état du système dans un deuxième espace d'états au premier instant, le premier élément informatique d'entrée correspondant (121) et le premier élément informatique intermédiaire correspondant (131) étant interconnectés,
- au moins deux deuxièmes sous - configurations comportant chacune un deuxième élément informatique intermédiaire correspondant (132, 133), avec lequel on peut décrire un état du système dans le deuxième espace d'états à un deuxième instant, et, respectivement, un premier élément informatique de sortie correspondant (141, 142), sur lequel il est possible de prélever une valeur de série chronologique de sortie, qui décrit la grandeur de sortie du système dynamique au deuxième instant, le deuxième élément informatique intermédiaire (132, 133) et le premier élément informatique de sortie (141, 142) étant interconnectés,

a) les deux deuxièmes sous-configurations étant interconnectées par un couplage des deuxièmes éléments informatiques intermédiaires (132, 133),

b) la première sous-configuration et, exactement, une deuxième sous-configuration étant interconnectées par un couplage des deuxièmes éléments informatiques intermédiaires (132, 133),

c) des pondérations, qui sont affectées chacune à une connexion entre deux éléments informatiques intermédiaires (131, 132, 133), étant identiques l'une à l'autre,

d) des pondérations, qui sont affectées chacune à une connexion entre un élément informatique intermédiaire (132, 133) et un élément informatique de sortie (141, 142), étant identiques l'une à l'autre,

si bien que la première sous - configuration, la deuxième sous - configuration connectée à la première sous-configuration et l'autre deuxième sous-configuration représentent les états du système dynamique qui se succèdent dans le temps, dans lequel une première donnée d'apprentissage est appliquée à la configuration à entraîner en tant que valeur de la série chronologique, une deuxième et une troisième donnée d'apprentissage sont appliquées à la configuration à entraîner en tant que valeur de la série chronologique de sortie et dans lequel, en utilisant le procédé d'apprentissage, les pondérations modifiables sont adaptées.

# FIG 1A

# FIG 1B

FIG 3

# FIG 2

$y_t$

$S_t$

200

$u_t$

# FIG 4

409

414

417

413

412

411

410

416

415

400

420

421

408

407

430

401

403

402

406

404

405

FIG 5